# EUROPEAN PATENT APPLICATION

(11) **EP 4 814 065 A1**
(43) Date of publication of application: **30.09.2026**
(21) Application number: 24893776.5
(22) Date of filing: 16.05.2024
(51) Int. Cl.: C09D 11/30, B41J 2/01, B41M 5/00

(54) **AQUEOUS INKJET INK AND PRINTED MATTER**

(30) Priority: 22.11.2023 JP 2023198147
(71) Applicant: artience Co., Ltd., Chuo-ku Tokyo 104-0031 (JP); TOYOCOLOR CO., LTD., Tokyo 104-8381 (JP)
(72) Inventor: NAKAMURA, Shunsuke, Tokyo 104-8381 (JP); HAYAMIZU, Mayuko, Tokyo 104-8381 (JP); SASAKI, Yuki, Tokyo 104-8381 (JP); YABUKI, Ryosuke, Tokyo 104-8381 (JP)
(74) Representative: SSM Sandmair
(86) International application number: PCT/JP2024/018127
(87) International publication number: WO 2025/109780

(57) **Abstract**

Provided is an aqueous inkjet ink capable of producing printed matter excellent in water resistance and abrasion resistance, and at the same time having high discharge stability. An aqueous inkjet ink including: water; a diol; a binder resin; and a wax, wherein the diol includes a diol (A) that has an SP value of 10.0 or more and less than 12.0 and includes a branched alkylene group, and a diol (B) that has an SP value of 12.0 or more and 15.0 or less, and a difference between a boiling point of the diol (A) at one atmosphere, and a boiling point of the diol (B) at one atmosphere is 30°C or less.

## Description

### Technical Field

Embodiments of the present invention relate to an aqueous inkjet ink and printed matter produced using the aqueous inkjet ink.

### Background Art

Unlike forme-based printing methods represented by gravure printing methods and offset printing methods, digital printing methods do not require a plate and thus have advantages such as reduction in size of a printing device, and reduction in printing costs. In an inkjet printing method, which is a type of digital printing method, ink is discharged from a nozzle of an inkjet head and attached to a printing substrate to record characters and/or images. In addition to the features of the digital printing method described above, the inkjet printing method also has advantages such as lower noise during printing, inexpensive printing devices, and ease of colorization.

Note that in the present disclosure, a printing substrate where characters and/or images are recorded is generally referred to as "printed matter". The above "image" includes a seamless image, such as a solid image or a checkered image.

Inks (also referred to as "inkjet inks" in the present disclosure) used in the inkjet printing method are classified into a solvent type, an aqueous type, an ultraviolet (UV) curable type, and the like, according to compositions. Meanwhile, in recent years, there has been an accelerating movement to restrict the use of raw materials that can be harmful to humans and the environment. Accordingly, there is a growing demand for aqueous-type inkjet inks (in the present disclosure, also referred to as simply "aqueous inkjet ink") instead of solvent-type inkjet inks and UV-curable inkjet inks using the above-described raw materials.

In recent years, because of the improvement in performance of inkjet heads, the development of the inkjet printing method for industrial applications has been promoted. In particular, in commercial printing and packaging (label and package) printing markets, replacement of the conventional forme-based printing method with the inkjet printing method has been actively considered because it can effectively utilize the advantages of the inkjet printing method described above and has high suitability for small-lot, high-variety printing.

In the packaging printing market, a printed surface is generally protected from rubbing, water immersion, and the like through a lamination process where a transparent film (laminate film) is bonded to the printed surface (surface to which ink has been applied). However, in recent years, there has been a movement to abolish the laminate film from a viewpoint of saving resources and environmental protection. In order to respond to such a movement, it is necessary to impart various kinds of resistance (abrasion resistance, water resistance, solvent resistance, etc.) to printed matter such that printed characters and/or images are not damaged without the laminate film.

As a means for improving various kinds of resistance possible with printed matter produced by using an aqueous inkjet ink, a method of promoting film formation of a binder resin included in the aqueous inkjet ink and thus increasing strength of the film itself has been described.

Patent Literature 1 discloses an ink including at least one of an amide compound or an oxetane compound, each having a specific structure, and two or more types of resin particles. Patent Literature 1 also discloses that by the presence of at least one of the amide compound or the oxetane compound, a state where the two or more types of resin particles are suitably mixed can be obtained during a drying process of the ink on a printing substrate, and as a result, even printed matter on a non-permeable substrate is excellent in abrasion resistance and solvent resistance.

Patent Literature 2 discloses an inkjet recording ink including two types of resin particles having different volume average particle sizes and different thermal deformation temperatures, where one of the two types of resin particles is a urethane resin. It is also described that by using the resin particles together, it is possible to prevent clogging of nozzles and smooth the printed surface. Furthermore, it is also described that the ink described in Patent Literature 2 can include wax particles as third resin particles, and that the wax particles can impart slip properties to the surface of printed matter and improve its abrasion resistance (see paragraphs 0054 and 0055).

### Citation List

### Patent Literature

Patent Literature 1: JP 2016-169370 A
Patent Literature 2: JP 2013-144730 A

### Summary of Invention

### Technical Problem

In the technique disclosed in Patent Literature 1, the presence of a compound which has a high affinity with resin particles and promotes miscibility of the resin particles, increases a risk of ink sticking near one of the inkjet head's nozzles. As a result of studies by the present inventors, it has been confirmed that the use of the compound impairs discharge stability, depending on printing conditions or the like. Meanwhile, discharge stability is not evaluated in the examples and the like of Patent Literature 1, and it is difficult to say that discharge stability has been sufficiently investigated.

In the technique disclosed in Patent Literature 2, depending on features of a raw material used together with wax particles, the wax may swell and/or aggregate in the ink, thereby impairing the discharge stability. Furthermore, there is a possibility that orientation of the wax to a printed surface is hindered by the raw material, and thus the desired effect of improving abrasion resistance may not be obtained. In fact, among the inks concretely disclosed in examples of Patent Literature 2, in spite of including wax particles, there are examples where clogging resistance of nozzles, that is, discharge stability, is poor, and examples where abrasion resistance is poor. Furthermore, Patent Literature 2 does not specifically describe a method of improving water resistance of printed matter.

As described above, it can be said that there have not yet been sufficient studies to obtain an aqueous inkjet ink that can produce printed matter excellent in water resistance and abrasion resistance, and at the same time has high discharge stability.

Embodiments of the present invention have been made in order to resolve the above-described issues, and an object thereof is to provide an aqueous inkjet ink capable of producing printed matter which is excellent in water resistance and abrasion resistance, and at the same time has high discharge stability.

### Solution to Problem

As a result of diligent studies, the present inventors have found that all of the above-described issues can be resolved by an aqueous inkjet ink having a composition below.

That is, some embodiments of the present invention relate to an aqueous inkjet ink illustrated in [1] to [5] below, and a method of producing printed matter using the above aqueous inkjet ink, illustrated in [6] below.
[1] An aqueous inkjet ink including:
   water; a diol; a binder resin; and a wax, wherein
   the diol includes a diol (A) that has an SP value of 10.0 or more and less than 12.0 and includes a branched alkylene group, and a diol (B) that has an SP value of 12.0 or more and 15.0 or less, and
   a difference between a boiling point of the diol (A) at one atmosphere, and a boiling point of the diol (B) at one atmosphere is 30°C or less.
[2] The aqueous inkjet ink according to [1], wherein
   the wax includes a polyolefin-based wax having a melting point of 100°C or more and 170°C or less at one atmosphere.
[3] The aqueous inkjet ink according to [2], wherein
   a value represented by R/W is 15 or less where W (g) is a content of the wax included in 100 g of the aqueous inkjet ink, and R (g) is a content of the binder resin included in 100 g of the aqueous inkjet ink.
[4] The aqueous inkjet ink according to [1] or [2], further including: a glycol monoether (C) having a terminal alkyl group of 2 to 4 carbon atoms.
[5] The aqueous inkjet ink according to [2], further including: a glycol monoether (C) having a terminal alkyl group of 2 to 4 carbon atoms, wherein
   a value represented by R/W is 15 or less where W (g) is a content of the wax included in 100 g of the aqueous inkjet ink, and R (g) is a content of the binder resin included in 100 g of the aqueous inkjet ink.
[6] A printed matter obtained by printing the aqueous inkjet ink according to any one of [1] to [5] on a printing substrate.

An aqueous inkjet ink according to an embodiment of the present invention is capable of producing printed matter excellent in abrasion resistance and water resistance, and at the same time having high discharge stability.

### Description of Embodiments

An aqueous inkjet ink according to one embodiment of the present invention (hereinafter referred to as "aqueous inkjet ink according to the present embodiment" or simply "ink") will be described below. Note that the present invention is not limited to the embodiments described below and also includes embodiments which can be modified without changing an essential part of the present invention.

The aqueous inkjet ink according to the present embodiment having the above-described structure can provide printed matter excellent in water resistance and abrasion resistance. Even when printing is resumed after, for example, a long period of suspension, discharge performance does not deteriorate. Although the mechanism is unclear, the inventors have presumed as follows. However, the present invention is not limited by the following presumption.

As described above, it is widely known that a binder resin is added to ink as a means of improving abrasion resistance and water resistance of printed matter. In addition, in order to impart favorable abrasion resistance and water resistance to the printed matter, sufficient film formation of the binder resin is required. Therefore, in the present embodiment, a diol (A) that has an SP value of 10.0 or more and less than 12.0, and a branched alkylene group is used together with a binder resin. While the diol (A) has water solubility due to the presence of multiple hydroxyl groups, a low SP value and the presence of the branched alkylene group make it possible to secure affinity with a resin component. As a result, after volatilization of water as a main component in ink droplets after printing, the binder resin is softened by the diol (A), whereby efficiency of film formation and uniformity of the film can be achieved, and abrasion resistance and water resistance of printed matter are improved.

Meanwhile, depending on properties of the binder resin (for example, glass transition temperature and mass average molecular weight), there is a case where sufficient abrasion resistance cannot be imparted to printed matter. In such a case, as described in Patent Literature 2, addition of a wax is known as a means for improving abrasion resistance. When the wax oriented on a surface of a dried ink film (ink film) melts through heating and/or pressing, slip properties are imparted to the film, and abrasion resistance is improved. In the present embodiment, it is more preferable to use a wax having a melting point of 100°C to 170°C. By using a wax having such a melting point, the wax does not melt under a standing environment or the like. Under general conditions of use, such as when printed matter is touched with a finger, slip properties exhibit, and the effect of improving abrasion resistance is particularly excellent.

However, since the diol (A) described above also has affinity with a wax, which is a type of resin component, when the diol (A) and the wax are used together, the wax may be destabilized in the ink. As a result, aggregation and precipitation of the wax may occur in an inkjet head, for example, which may lead to deterioration of discharge stability. In addition, after printing, the orientation of the wax to the film surface is hindered, and there is a possibility that favorable abrasion resistance is not obtained.

As a result of diligent research, the inventors of the present invention have found that, by using the diol (A), and a diol (B) having an SP value of 12.0 or more, together, and by setting the difference between a boiling point of the diol (A) and that of the diol (B) to 30°C or less, aggregation and precipitation of a wax in an inkjet head can be controlled, and discharge stability can be improved, for example, even after a long period of suspension, and further that it is possible to produce printed matter having favorable abrasion resistance. Although details of the reason are unclear, it is considered that the diol (B) having a high SP value of 12.0 or more has favorable affinity with water and the diol (A), but has inferior affinity with a resin component, compared with the diol (A). As a result, since the diol (B) inhibits the affinity between the diol (A) and the wax in the inkjet head, aggregation and precipitation of the wax can be prevented, and discharge stability can be improved. Furthermore, since the boiling point of the diol (B) is almost the same as that of the diol (A), it is considered that the diol (B) and the diol (A) remain in ink droplets after printing, even after water, which is a main component, volatilizes. As a result, a state in which the wax and the diol (A) do not easily have an affinity is maintained in ink droplets as well as in the above-described behavior in the inkjet head, and as a result, the orientation of the wax to the film surface is unlikely to be hindered by the diol (A), thereby improving abrasion resistance.

In response to the above-described issues, an aqueous inkjet ink having the above-described configuration is provided. Specifically, the present embodiment has been made based on the finding that it is sufficient to use the diol (B) in an aqueous inkjet ink combining water, the diol (A), a binder resin, and a wax, in order to avoid impairing the effects of the wax.

Note that the aqueous inkjet ink specifically disclosed in Patent Literature 1 is different from the aqueous inkjet ink according to the present embodiment in that the former does not contain a wax. The aqueous inkjet ink specifically disclosed in Patent Literature 2 is different from the aqueous inkjet ink according to the present embodiment in that the former does not include the diol (A) having an SP value of 10.0 or more and less than 12.0, and having a branched alkylene group.

Next, components making up an aqueous inkjet ink according to an embodiment will be described in detail.

### <Diols>

The aqueous inkjet ink according to the present embodiment includes diols. As described above, the diols include the diol (A) having an SP value of 10.0 or more and less than 12.0 and including a branched alkylene group, and the diol (B) having an SP value of 12.0 or more and 15.0 or less.

Note that in the present disclosure, diols having a ring structure (alicyclic structure and aromatic structure) are not included in the above diols. The above "branched alkylene group" refers to an alkylene group having only an alkyl group as a branched structure.

The term "SP value" in the present disclosure is an acronym of "solubility parameter". As a method of determining the SP value, a method of calculating an SP value from a physical property value of a compound, a method of calculating an SP value from a molecular structure, a method of measuring an SP value through experiment, and the like are known. In the present disclosure, a value calculated using Fedor's estimation method expressed by formula 1 below is used as the SP value.$\left(SP value\right) = {\left(ΣEcoh/ΣV\right)}^{1 / 2}$

In formula 1, Ecoh represents a cohesive energy determined for each functional group, and V represents a molar volume determined for each functional group. The above Ecoh and V are described in R. F. Fedors, "Polymer Engineering & Science" (Vol. 14, No. 2, 1974, pp. 147-154).

Note that in the present disclosure, (cal/cm³)^{1/2} is used as the unit of SP value.

### <<Diol (A) having SP value of 10.0 or more and less than 12.0 and including branched alkylene group>>

In an aqueous inkjet ink according to the present embodiment, examples of the diol (A) which can be used include 2-ethyl-1,3-hexanediol (11.1, 244°C), 2,5-dimethyl -2,5-hexanediol (10.8, 214°C), 2-methyl-2,5-hexanediol (11.2, 231°C), hexylene glycol(2-methyl-2,4-pentanediol; 11.5, 197°C), 2-methyl-1,3-pentanediol (11.6, 218°C), 3-methyl-1,5-pentanediol (11.8, 250°C), and 2,3-dimethyl-2,3-butanediol (11.3, 174°C). One of these compounds may be used alone, or two or more of these compounds may be used in combination. Note that the numerical values in the parentheses above represent the SP value (unit:
(cal/cm³)^{1/2}) and the boiling point of each compound at one atmosphere.

Thereamong, it is preferable to use a compound having 6 carbon atoms, as the diol (A), in terms of ease of affinity with both water and a binder resin component, which facilitates efficiency of film formation and uniformity of the film, and improves abrasion resistance and water resistance of printed matter. Further, thereamong, it is particularly preferable to use hexylene glycol in terms of having excellent dryness and improving water resistance of printed matter.

The SP value of the diol (A) is preferably 10.5 or more and less than 12.0, and particularly preferably 11.2 or more and less than 12.0 in terms of ease of affinity with both water and a binder resin component, and improving abrasion resistance and water resistance of printed matter.

The diol (A) may be solid or liquid at 25°C, and is more preferably a water-soluble organic solvent which is liquid at 25°C.

The content of the diol (A) is preferably within a range from 0.5% to 19% by mass, more preferably from 1.2% to 16% by mass, and particularly preferably from 2% to 12% by mass, relative to the total amount of the aqueous inkjet ink, in terms of improving discharge stability regardless of use conditions, and obtaining a printed matter having excellent abrasion resistance and water resistance.

In addition, the content of the diol (A) is preferably within a range from 10% to 49% by mass, more preferably from 15% to 42% by mass, and particularly preferably from 20% to 35% by mass, relative to the total amount of the water-soluble organic solvent included in the aqueous inkjet ink. In the present disclosure, the total amount of the water-soluble organic solvent does not include the content of a compound which is not a water-soluble organic solvent among the diol (A) and the diol (B). The same applies hereinafter.

### <Diol (B) having SP value of 12.0 or more>

In the aqueous inkjet ink according to the present embodiment, examples of the diol (B) which can be used include 1,2-propanediol(propylene glycol) (13.5, 188°C), 1, 3-propanediol (13.7, 214°C), 1,2-butanediol (12.8, 193°C), 1,3-butanediol (12.8, 208°C), 1,4-butanediol (12.9, 230°C), 2,3-butanediol (12.5, 183°C), 1,2-pentanediol (12.2, 206°C), 1,5-pentanediol (12.4, 239°C), 2,2-dimethyl-1,3-propanediol (12.1, 210°C), 2-methyl-1,3-propanediol (12.8, 213°C), 3-methyl-1,3-butanediol (12.6, 203°C), ethylene glycol (14.8, 197°C), diethylene glycol (13.0, 244°C), and triethylene glycol (12.1, 287°C). One of these compounds may be used alone, or two or more of these compounds may be used in combination. Note that values in the parentheses above represent the SP value (unit: (cal/cm³)^{1/2}) and the boiling point at one atmosphere of each compound.

Thereamong, the SP value of the diol (B) is preferably within a range from 12.0 to 14.0 (cal/cm³)^{1/2}), and particularly preferably from 12.5 to 13.5 (cal/cm³)^{1/2}), from the viewpoint that affinity between the diol (A) and a wax is inhibited by a moderate increase in affinity with the diol (A), thereby improving discharge stability. In consideration of affinity with water, it is preferable to use a compound having 3 to 4 carbon atoms. Among the compounds listed above, examples of a compound satisfying these requirements include one or more selected from the group consisting of 1,2-propanediol, 1,3-propanediol, 1,2-butanediol, 1,3-butanediol, 2,3-butanediol, 2-methyl-1,3-propanediol, and diethylene glycol. In the aqueous inkjet ink according to the present embodiment, it is preferable to use one or more of these compounds as the diol (B).

The diol (B) may be solid or liquid at 25°C, and is more preferably a water-soluble organic solvent which is liquid at 25°C.

From the viewpoint of achieving both a moisture retention property (discharge stability) in an inkjet nozzle, and dryness and water resistance of printed matter, the content of the diol (B) is preferably within a range from 1% to 30% by mass, more preferably from 4% to 25% by mass, and particularly preferably from 6% to 20% by mass, relative to the total amount of the aqueous inkjet ink.

In addition, the content of the diol (B) is preferably within a range from 51% to 99% by mass, more preferably from 55% to 95% by mass, and particularly preferably from 60% to 90% by mass, relative to the total amount of the water-soluble organic solvent included in the aqueous inkjet ink.

From the viewpoint that the effect of inhibiting affinity between the diol (A) and a wax by the diol (B) can be suitably exhibited, and abrasion resistance of printed matter can be improved while enhancing discharge stability, the ratio of the content of the diol (B) to the content of the diol (A) (diol (B) / diol (A)) is preferably within a range from 1 to 5, more preferably from 1.5 to 4.5, and particularly preferably from 2 to 4 in mass equivalent.

As described above, by setting the difference between the boiling point of the diol (A) and the boiling point of the diol (B) to 30°C or less, aggregation of a wax in an ink drying process can be controlled. Since the orientation of a wax to a film surface is unlikely to be inhibited by the diol (A), printed matter having favorable abrasion resistance can be produced. From the viewpoint that both the diol (A) and the diol (B) easily remain in ink droplets on a printing substrate, and the effect described above can be suitably exhibited, it is considered that the smaller the difference between the boiling points, the better. Specifically, the difference between the boiling point of the diol (A) at one atmosphere and the boiling point of the diol (B) at one atmosphere is preferably 20°C or less, and particularly preferably 15°C or less. For example, the difference between the boiling points may be within a range from 0°C to 10°C.

Note that when two or more types of diol (A) are included in an aqueous inkjet ink, the difference between boiling points is calculated by using a weighted average value of boiling points of the two or more types of diol (A). The same applies to the diol (B). However, the above "weighted average value of boiling points" is a value obtained by adding together the products of the boiling point and the mass ratio relative to the total content of a water-soluble organic solvent, calculated for each compound.

### <Water-soluble organic solvent>

The aqueous inkjet ink according to the present embodiment may include a water-soluble organic solvent. Note that in the present disclosure, the term "water-soluble organic solvent" refers to an organic compound having a solubility in water at 25°C of 1% by mass or more, and being liquid at 25°C. Among compounds included in the diol (A) and the diol (B) described above, compounds satisfying the above conditions are also included in the "water-soluble organic solvent" in the present disclosure.

### <Other diols>

For example, diols not corresponding to the above diol (A) and the above diol (B) (referred to as "other diols" in the present disclosure) can be used as a water-soluble organic solvent in the aqueous inkjet ink according to the present embodiment. Examples of the other diols include 1,2-hexanediol and 1-2-heptanediol.

### <Glycol monoether (C) having terminal alkyl group of 2 to 4 carbon atoms>

The aqueous inkjet ink according to the present embodiment may include, as a water-soluble organic solvent, a glycol monoether (C) having a terminal alkyl group of 2 to 4 carbon atoms. When the inkjet ink according to the present embodiment includes the glycol monoether (C), a binder resin can be further softened together with the diol (A) described above, and efficiency of film formation and uniformity of a film are promoted, thereby further improving abrasion resistance and water resistance of printed matter. When the aqueous inkjet ink according to the present embodiment includes a surfactant, for example, the orientation of the surfactant in an inkjet head is controlled by the glycol monoether (C), thereby further improving discharge stability, especially discharge stability after a short pause.

Examples of the glycol monoether (C) include a propylene glycol monopropyl ethers, propylene glycol monobutyl ethers, diethylene glycol monoethyl ethers, diethylene glycol monoisopropyl ethers, diethylene glycol monobutyl ethers, dipropylene glycol monopropyl ethers, and dipropylene glycol monobutyl ethers. When the inkjet ink according to the present embodiment includes the glycol monoether (C), from among the compounds listed above, it is preferable to use one or more compounds selected from the group consisting of a propylene glycol monobutyl ether, a diethylene glycol monoethyl ether, and a diethylene glycol monobutyl ether. These compounds can be preferably used because they have particularly favorable affinity with binder resins, and further improve abrasion resistance and water resistance of printed matter when used in combination with the diol (A). More preferably, a propylene glycol monopropyl ether, a diethylene glycol monoethyl ether, a diethylene glycol monobutyl ether, or a combination thereof is used.

From the viewpoint of obtaining an aqueous inkjet ink excellent in all of abrasion resistance and water resistance of printed matter, and discharge stability, the content of the glycol monoether (C) relative to the total amount of the aqueous inkjet ink is preferably within a range from 0.1% to 15% by mass, more preferably from 0.5% to 12% by mass, and particularly preferably from 1% to 10% by mass.

Furthermore, from the viewpoint of controlling aggregation of a wax, and achieving both abrasion resistance of printed matter and discharge stability at the time of printing, when the aqueous inkjet ink according to the present embodiment includes the glycol monoether (C), the total content of the diol (A) (only compound corresponding to water-soluble organic solvent) and the glycol monoether (C), which exhibit the same effect, is preferably 10% by mass or more and less than 50% by mass, and particularly preferably 10% by mass or more and 40% by mass or less, relative to the total amount of the water-soluble organic solvent included in the aqueous inkjet ink.

From the viewpoint of improving abrasion resistance of printed matter and discharge stability at the time of printing, by the same effect as described above, when the aqueous inkjet ink according to the present embodiment includes the glycol monoether (C), the total content of the diol (A) and the glycol monoether (C) is preferably 10% by mass or more and less than 50% by mass, and particularly preferably 10% by mass or more and 40% by mass or less, relative to the total content of a water-soluble organic solvent, a compound which is the diol (A) but not a water-soluble organic solvent, and a compound which is the diol (B) but not a water-soluble organic solvent.

### <<Other water-soluble organic solvents>>

In the aqueous inkjet ink according to the present embodiment, in addition to the compounds listed above, examples of water-soluble organic solvents that can be used include: alkanetriols (wherein the number of carbon atoms is 3 to 6); polyoxyalkylene glycols (wherein the oxyalkylene groups are oxyethylene groups or oxypropylene groups, and the number of oxyalkylene groups is 2 to 4); glycol monoethers wherein the terminal alkyl group has 1 carbon atom; glycol diethers (wherein each of the two terminal alkyl groups has 1 to 4 carbon atoms); lactams (wherein the number of atoms constituting the lactam ring is 5 to 7, and an alkyl group having 1 to 2 carbon atoms, a hydroxyalkyl group having 1 to 2 carbon atoms, or a vinyl group may be bonded to the nitrogen atom and/or carbon atom(s) constituting the lactam ring); and alkanolamines (wherein the number of amino groups is 1, the number of hydroxyl groups is 1 to 3, and the number of carbon atoms is 3 to 9). One of these water-soluble organic solvents may be used alone, or two or more of these water-soluble organic solvents may be used in combination.

When the aqueous inkjet ink according to the present embodiment includes other water-soluble organic solvent, it is preferable to use a water-soluble organic solvent having a static surface tension of 29 to 50 mN/m at 25°C as the other water-soluble organic solvent. By using the water-soluble organic solvent having the above surface tension, it is possible to maintain an appropriate surface tension for discharge as the inkjet ink, and it is also possible to improve discharge stability, for example, even after a long period of suspension.

Meanwhile, in order to simultaneously improve water resistance and abrasion resistance of printed matter, and discharge stability, it is preferable to make the total content of the diol (A), the diol (B), and the glycol monoether (C) equal to or greater than a certain amount. Specifically, when the aqueous inkjet ink according to the present embodiment includes the glycol monoether (C), the total content of the diol (A), the diol (B), and the glycol monoether (C) is preferably within a range from 70% to 100% by mass, and particularly preferably from 85% to 100% by mass, relative to the total content of a water-soluble organic solvent, a compound that is the diol (A) but not a water-soluble organic solvent, and a compound that is the diol (B) but not a water-soluble organic solvent. When the aqueous inkjet ink according to the present embodiment does not include the glycol monoether (C), for the same reason as described above, the total content of the diol (A) and the diol (B) is preferably within a range from 70% to 100% by mass, and particularly preferably from 85% to 100% by mass, relative to the total content of a water-soluble organic solvent, a compound that is the diol (A) but not a water-soluble organic solvent, and a compound that is the diol (B) but not a water-soluble organic solvent.

When the aqueous inkjet ink according to the present embodiment includes a water-soluble organic solvent that is not the diol (A), the diol (B), or the glycol monoether (C), it is preferable to include other diol described above and/or a polyoxyalkylene glycol.

The total content of a water-soluble organic solvent included in the aqueous inkjet ink according to the present embodiment is preferably within a range from 5% to 50% by mass, more preferably from 9% to 40% by mass, even more preferably from 12% to 35% by mass, and particularly preferably from 15% to 30% by mass, relative to the total amount of the aqueous inkjet ink. By keeping the total content of the water-soluble organic solvent within the above ranges, it is possible to maintain an appropriate viscosity for discharge as the aqueous inkjet ink, and to improve discharge stability, for example, even after a long period of suspension.

Note that the total content of the water-soluble organic solvent includes the content of a compound corresponding to the requirements of the water-soluble organic solvent described above among the diol (A) and the diol (B).

Further, since it is possible to simultaneously improve water resistance and abrasion resistance of printed matter, and discharge stability, the total content of a water-soluble organic solvent, a compound which is the diol (A) but not a water-soluble organic solvent, and a compound which is the diol (B) but not a water-soluble organic solvent is preferably within a range from 5% to 50% by mass, more preferably from 9% to 40% by mass, even more preferably from 12% to 35% by mass, and particularly preferably from 15% to 30% by mass, relative to the total amount of the aqueous inkjet ink.

Note that the content of the diol (A) relative to the total content of a water-soluble organic solvent, a compound which is the diol (A) but not a water-soluble organic solvent, and a compound which is the diol (B) but not a water-soluble organic solvent is preferably within a range from 10% to 49% by mass, more preferably from 15% to 42% by mass, and particularly preferably from 20% to 35% by mass, in terms of suitably softening a binder resin, and improving abrasion resistance and water resistance of printed matter.

The content of the diol (B) relative to the total content of a water-soluble organic solvent, a compound which is the diol (A) but not a water-soluble organic solvent, and a compound which is the diol (B) but not a water-soluble organic solvent is preferably within a range from 50% to 99% by mass, more preferably from 55% to 95% by mass, and particularly preferably from 60% to 90% by mass, in terms of controlling aggregation and deposition of a wax, improving discharge stability, and improving abrasion resistance.

In the aqueous inkjet ink according to the present embodiment, the content of a water-soluble organic solvent having a boiling point of 250°C or higher at one atmosphere is preferably 1% by mass or less (may be 0% by mass) relative to the total amount of the aqueous inkjet ink. When the water-soluble organic solvent having a boiling point of 250°C or higher is not included, or when the water-soluble organic solvent is included but the blending amount thereof is within the above ranges, discharge stability is improved, for example, even after a long period of suspension.

For the same reason, that is, from the viewpoint of improving discharge stability, the total content of the water-soluble organic solvent having a boiling point of 250°C or higher at one atmosphere, a compound which is the diol (A) but not a water-soluble organic solvent, and has a boiling point of 250°C or higher at one atmosphere, and a compound which is the diol (B) but not a water-soluble organic solvent, and has a boiling point of 250°C or higher at one atmosphere is preferably 1% by mass or less (may be 0% by mass) relative to the total amount of the aqueous inkjet ink.

Further, when the aqueous inkjet ink according to the present embodiment includes a water-soluble organic solvent, the boiling point (weighted average value) of the water-soluble organic solvent at one atmosphere is preferably within a range from 120°C to 215°C, and particularly preferably from 150°C to 200°C. By setting the boiling point (weighted average value) within the above ranges, discharge stability, and abrasion resistance and water resistance of printed matter can be both achieved.

For the same reason, that is, from the viewpoint of achieving both discharge stability, and abrasion resistance and water resistance of printed matter, a weighted average value of boiling points of a water-soluble organic solvent, a compound which is the diol (A) but not a water-soluble organic solvent, and a compound which is the diol (B) but not a water-soluble organic solvent at one atmosphere is preferably within a range from 120°C to 215°C, and particularly preferably from 150°C to 200°C.

Note that in the present disclosure, the term "boiling point (weighted average value) of a water-soluble organic solvent" refers to a boiling point of a water-soluble organic solvent when a target composition includes only one type of water-soluble organic solvent, or to a weighted average value of boiling points of two or more types of water-soluble organic solvents when a target composition includes two or more types of water-soluble organic solvents. In addition, when calculating the boiling point (weighted average value) of a water-soluble organic solvent, a compound which corresponds to the requirements of a water-soluble organic solvent among the diol (A) and the diol (B) described above is also included.

### <Binder resin>

The aqueous inkjet ink according to the present embodiment includes a binder resin in terms of imparting water resistance and abrasion resistance to printed matter, and further obtaining printed matter having excellent print quality where bleeding (a phenomenon where aqueous inkjet inks having different colors mix with each other) and beading (a phenomenon where droplets of an aqueous inkjet ink are attracted to each other, and coalescing occurs) are controlled because the above-described aqueous inkjet ink printed on a low-permeation substrate or non-permeable substrate increases in viscosity at a rate on the order of microseconds during drying.

In the present disclosure, the term "binder resin" is a resin used for bonding an ink film to a printing substrate. For example, a resin included in an amount of 50% by mass relative to the total resin amount included in the aqueous inkjet ink according to the present embodiment is preferably a binder resin in the present disclosure. Further, the term "resin" refers to a compound obtained by polymerizing multiple polymerizable monomers and having a mass average molecular weight of 1,000 or more.

In the present disclosure, a value in terms of polystyrene, which can be measured using a method in accordance with JIS K 7252, is used as the mass average molecular weight of a compound. Examples of specific measurement conditions are illustrated below.
· Device used: "HLC-8320GPC" manufactured by Tosoh Corporation
· Column used: TSKgel^{®} SuperMultiporeHZ-M (3 pieces)
· Column temperature: 40°C
· Eluent: tetrahydrofuran
· Flow rate: 0.6 mL/min
· Sample solution concentration: 0.1% by mass
· Sample solution injection volume: 10 µL

Generally, water-soluble resins and resin microparticles are known as forms of resins used in aqueous inkjet inks. A binder resin included in the aqueous inkjet ink according to the present embodiment may be a water-soluble resin or resin microparticles. Alternatively, a combination of a water-soluble resin and resin microparticles may be used.

Note that in the present disclosure, a resin having a solubility of 1 g or more in 100 g of water at 25°C is referred to as a "water-soluble resins", and a resin having a solubility of less than 1 g is referred to as a "water-insoluble resin". Of the water-insoluble resin, a resin dispersed in water in the form of particles and having a median diameter (also referred to as "D50" in the present disclosure) of 10 to 1,000 nm on a volume basis is referred to as "resin microparticles".

In the present disclosure, D50 is a value measured under an environment of 25°C using water as a dispersion medium and using a dynamic light-scattering particle size distribution analyzer, such as "NANOTRACK UPA-EX150" manufactured by MicrotracBEL Corp.

Examples of binder resins that can be used in the aqueous inkjet ink according to the present embodiment include acrylic resins (excluding acrylic-silicone copolymers described below), styrene resins, styrene-(anhydrous)maleic acid resins, olefin-(anhydrous)maleic acid resins, urethane resins (except urethane-silicone copolymers described below), polyester resins, vinyl chloride resins, vinyl chloride-vinyl acetate resins, polyolefin resins, and polyvinyl alcohol resins. One of these resins may be used alone, or two or more of these resins may be used in combination.

Among the above-described resins, it is preferable to use one or more resins selected from the group consisting of an acrylic resin (excluding acrylic-silicone copolymers described below), a urethane resin (except urethane-silicone copolymers described below), and a polyester resin, and it is more preferable to use at least an acrylic resin (excluding acrylic-silicone copolymers described below), in terms of obtaining printed matter having excellent water resistance and abrasion resistance.

Note that in the present disclosure, the term "acrylic resin" refers to a resin using one or more resins selected from the group consisting of an acrylic acid, a methacrylic acid, an acrylic ester, and a methacrylic ester, as a polymerizable monomer (a styrene-based monomer may be further used as a polymerizable monomer). The term "(anhydrous)maleic acid" refers to at least one selected from "maleic acid" or "maleic anhydride".

A suitable content of a binder resin included in the aqueous inkjet ink according to the present embodiment is preferably within a range from 1% to 25% by mass, more preferably from 2% to 20% by mass, and particularly preferably from 5% to 18% by mass, relative to the total amount of the aqueous inkjet ink.

### <Wax>

The inkjet ink according to the present embodiment includes a wax. In the present disclosure, the term "wax" is a nonvolatile organic compound that is solid at normal temperature (25°C) and becomes liquid when heated. For example, it refers to a compound that has a melting point of 40°C to 200°C, and melts without decomposing under a temperature environment above the melting point. The melting point of a wax is preferably within a range from 100°C to 170°C, and more preferably from 110°C to 150°C, from the viewpoint of improving abrasion resistance of printed matter. Note that in the present disclosure, the melting point of a wax used is the value at one atmosphere. From the viewpoint of abrasion resistance of printed matter, the melting point of a wax is more preferably within a range from 100°C to 160°C, even more preferably from 110°C to 150°C, and still more preferably from 110°C to 137°C.

The term "nonvolatile organic compound" used in the present disclosure refers to an organic compound where "nonvolatile residue" is present when a wax is dried under a conditions of a test temperature of 140°C, a heating time of 30 minutes, and a sample amount of 1±0.2 g, according to a method in accordance with JIS K 5601.

The above wax may be a water-soluble compound or a water-insoluble compound, and preferably a water-insoluble compound. As the wax, a resin is preferably used, and a resin in the form of resin microparticles is particularly preferably used.

Meanwhile, when waxes that can be used in the aqueous inkjet ink according to the present embodiment are classified by chemical structure, examples include hydrocarbon waxes, ester waxes (e.g., fatty acid esters), silicone waxes (e.g., acrylic resins having a silicone chain (siloxane chain) structure (acrylic-silicone copolymers), urethane resins having a silicone chain structure (urethane-silicone copolymers), and fatty acid esters having a silicone chain structure), and polyalkylene glycol waxes (e.g., polyethylene glycol having a mass average molecular weight of 600 or more, polypropylene glycol having a mass average molecular weight of 10,000 or more, and polyethylene glycol-polypropylene glycol copolymers having a mass average molecular weight of 6,000 or more).

Note that among acrylic resins having a silicone chain structure, those having a glass transition temperature of 50°C or higher are generally unlikely to satisfy the above melting point condition and thus do not correspond to the wax of the present embodiment.

When waxes that can be used in the aqueous inkjet ink according to the present embodiment are classified according to methods of obtaining them, examples include natural waxes, synthetic waxes, and semi-synthetic waxes. Examples of natural waxes include: petroleum-based waxes such as paraffin wax, microcrystalline wax, and petrolatum; plant-based waxes such as carnauba wax, candelilla wax, and rice wax; animal-based waxes such as lanolin and beeswax; and mineral-based waxes such as montane wax and ceresin. Examples of synthetic waxes include polyolefin-based waxes (polyethylene wax, polypropylene wax, etc.), Fischer-Trobsch wax, acrylic-silicone copolymers, urethane-silicone copolymers, polyethylene glycol, polypropylene glycol, and polyethylene glycol-polypropylene glycol copolymers. Examples of semi-synthetic waxes include paraffin wax derivatives, montane wax derivatives, and microcrystalline wax derivatives.

The waxes described above can be used alone or in combination of two or more in the aqueous inkjet ink.

Among the above-described waxes, hydrocarbon waxes and/or silicone waxes can be preferably used, and hydrocarbon waxes can be more preferably used, in terms of obtaining printed matter having excellent abrasion resistance and print quality on various printing substrates. Examples of hydrocarbon waxes include natural waxes such as paraffin wax and microcrystalline wax, and synthetic waxes such as polyolefin-based waxes and Fischer-Trobsch wax, and among the above hydrocarbon waxes, polyolefin-based waxes can be more preferably used. By including a polyolefin wax, a binder resin and the polyolefin wax each form microscopic clusters, which control uneven distribution of components included in the aqueous inkjet ink when the aqueous inkjet ink is dried, thereby improving beading. Furthermore, the clusters function to prevent local drying and viscosity increase in the vicinity of an inkjet nozzle, thereby improving discharge stability.

Examples of polyolefin-based waxes include polyethylene-based waxes and polypropylene-based waxes. Thereamong, the use of polyethylene-based waxes is preferable in terms of improving discharge stability and abrasion resistance of printed matter. Note that the polyolefin-based waxes described above can be used alone or in combination of two or more.

The above-described polyolefin-based waxes are preferably soft polyolefins having a mass average molecular weight of 500 to 10,000. The mass average molecular weight is particularly preferably 600 to 8,000.

When resin microparticles are used as a wax, the D50 of the wax is preferably within a range from 5 to 300 nm, more preferably from 30 to 250 nm, and particularly preferably from 40 to 200 nm. When the D50 of the wax is 5 nm or more, abrasion resistance of printed matter is improved, and when the D50 of the wax is 300 nm or less, not only discharge stability is improved, but also printed matter having excellent print quality can be obtained regardless of printing substrates. Note that the D50 of the wax can be measured using the same method as the D50 of the resin microparticles.

A wax in the form of resin microparticles can be produced, for example, by mixing an ordinary-temperature solid resin which has been heated and melted, hot water, and an emulsifier. Commercially available waxes can be used, and examples include: AQUACER-507, 513, 515, 526, 531, 533, 535, 537, 539, 552, 840, 593, and 1547, and HORDAMER PE 02 and PE 03 manufactured by BYK-Chemie GmbH; NOPCOAT PEM-17 manufactured by SAN NOPCO Limited; JONCRYLWAX4, WAX26, WAX28, WAX120, and the like manufactured by BASF SE; HITEC E series and HITEC P series manufactured by TOHO CHEMICAL INDUSTRY Co., Ltd.; CHALINE FE230N, FE502, and the like manufactured by Shin-Etsu Chemical Co., Ltd.

The wax content is preferably within a range from 0.2% to 8% by mass, more preferably from 0.3% to 5% by mass, and particularly preferably from 0.5% to 4% by mass, relative to the total mass of the aqueous inkjet ink, in terms of achieving both discharge stability and abrasion resistance of printed matter, and further obtaining a highdensity printed matter without beading. For the same reason, when the content of a wax is W (mass%), and the content of a binder resin is R (mass%), relative to the total mass of the aqueous inkjet ink, the value represented by R/W is preferably 1 to 15, and particularly preferably 3 to 13. When R/W is 22 or less, preferably 15 or less, abrasion resistance of printed matter can be further improved. When R/W is 0.9 or more, preferably 1 or more, water resistance of printed matter can be further improved. R/W is more preferably 1 to 15, even more preferably 2 to 14, and still more preferably 5 to 13. In these ranges, abrasion resistance, water resistance, and discharge stability of printed matter can be further improved.

Note that as described above, in the present disclosure, the wax and the binder resin can be distinguished by their melting points. That is, the wax in the present disclosure is a compound which is solid at ordinary temperature (25°C) and has a melting point of 40°C to 200°C. The melting point of the wax is preferably within a range from 100°C to 170°C, and particularly preferably from 110°C to 150°C. In contrast, the binder resin in the present disclosure is, for example, a compound which is solid at ordinary temperature (25°C) and has a melting point greater than 200°C, or a compound which is solid at ordinary temperature (25°C) and has no melting point. Specifically, the binder resin is a resin which decomposes without melting when heated, or an amorphous resin.

Further, the ratio of the content of the diol (A) to the content of the wax (diol (A) / wax) is, in mass equivalent, preferably within a range from 2 to 12, and particularly preferably from 3 to 10, in terms of controlling destabilization of the wax and ease of achieving both discharge stability and abrasion resistance of printed matter, by optimizing the ratio of the content of the diol (A) to the content of the wax.

### <Colorant>

The aqueous inkjet ink according to the present embodiment may include a colorant. Conventionally known dyes and pigments can be used as the colorant. Thereamong, it is preferable to use a pigment because printed matter having high density or a high opacifying property, and excellent light resistance, water resistance and the like can be obtained, and because after landing on a printing substrate, the ink appropriately dries and thickens to control color mixing between aqueous inkjet ink colors, and improve print quality.

Conventionally known organic and inorganic pigments can be optionally used as the pigment. For example, pigments represented by the following color index names can be used.

That is, red pigments such as C. I. Pigment Red 52, 5, 7, 9, 12, 17, 22, 23, 31, 48:1, 48:2, 48:3, 48:4, 49:1, 49:2, 57:1, 57:2, 112, 122, 123, 146, 147, 149, 150, 166, 168, 170, 171, 175, 176, 177, 178, 184, 188, 202, 207, 209, 254, 255, 260, 264, 266, 269, and 282;
violet pigments such as C. I. Pigment Violet 19, 23, 29, 32, 36, 37, 42, and 50;
orange pigments such as C. I. Pigment Orange 1, 2, 3, 5, 7, 13, 14, 15, 16, 22, 34, 36, 38, 40, 43, 47, 48, 49, 51, 52, 53, 60, 61, 62, 64, 65, 66, 69, 71, and 73;
blue pigments such as C. I. Pigment Blue 15, 15:3, 15:4, 15:6, 16, 60, 64, and 79;
green pigments such as C. I. Pigment Green 7, 10, 36, and 48;
yellow pigments such as C. I. Pigment Yellow 1, 2, 3, 5, 12, 13, 14, 16, 17, 24, 73, 74, 83, 87, 93, 94, 95, 97, 98, 109, 110, 111, 112, 120, 126, 127, 128, 129, 137, 138, 139, 147, 150, 151, 154, 155, 166, 167, 168, 170, 180, 185, and 213;
black pigments such as C. I. Pigment Black 1, 7, and 11;
white pigments such as C. I. Pigment White 4, 5, 6, and 21; and the like.

One of these pigments may be used alone, or two or more pigments may be used in combination. A solid solution made from two or more of the pigments listed above can also be used as a pigment.

The content of a pigment included in the aqueous inkjet ink according to the present embodiment is adjusted according to applications of printed matter produced using the aqueous inkjet ink, and is preferably, for example, within a range from 0.5% to 30% by mass relative to the total amount of the aqueous inkjet ink. In addition, except in the case of a white aqueous inkjet ink (aqueous white ink), the content of the above pigment is more preferably within a range from 1% to 15% by mass, and particularly preferably from 1.5% to 10% by mass, in terms that printed matter having a high concentration can be obtained without deteriorating discharge stability of the aqueous inkjet ink. In contrast, in the case of an aqueous white ink, the content of the above pigment is more preferably within a range from 5% to 25% by mass, and particularly preferably from 10% to 20% by mass, in terms that printed matter having a high opacifying property can be obtained without deteriorating discharge stability of the aqueous white ink.

### <Pigment dispersing resin>

When the aqueous inkjet ink according to the present embodiment includes a pigment, a resin used in pigment dispersing applications (pigment dispersing resin) can be used. By selecting and examining the composition and mass average molecular weight of a polymerizable monomer forming the pigment dispersing resin, it becomes possible to easily adjust coating ability and charge of the pigment dispersing resin for the pigment, which makes it possible to provide dispersion stability even for fine pigments, and further to obtain printed matter excellent in discharge stability, color developability, and color reproducibility.

The type of pigment dispersing resin is not particularly limited, and examples thereof that can be used include acrylic resins (excluding acrylic-silicone copolymers described above), styrene resins, styrene-(anhydrous)maleic acid resins, olefin-(anhydrous)maleic acid resins, urethane resins (excluding urethane-silicone copolymer described above), polyester resins, vinyl chloride resins, vinyl chloride-vinyl acetate resins, polyolefin resins, and polyvinyl alcohol resins. Thereamong, it is preferable to use one or more types selected from the group consisting of an acrylic resin, a urethane resin, a polyester-based resin, and a polyolefin-based resin, in terms of discharge stability, material selectivity, ease of synthesis, and the like.

The pigment dispersing resin may be synthesized using a known method or a commercially available product. The structure of the pigment dispersing resin is not particularly limited, and for example, a resin having a random structure, a block structure, a comb-shaped structure, a star-shaped structure, or the like can be used. A water-soluble resin or a water-insoluble resin may be selected as the pigment dispersing resin. Note that an example of a case where the pigment dispersing resin is a water-insoluble resin is resin microparticles including a pigment. When the aqueous inkjet ink includes a water-soluble resin, whether or not the water-soluble resin is a pigment dispersing resin can be confirmed using a method in accordance with JIS K 5101-1-4.

Specifically, 600 g of carbon black having a primary particle size of 15 to 25 nm, a nitrogen adsorption specific surface area of 120 to 260 m²/g, and a DBP absorption amount (granular) of 40 to 80 cm³ / 100 g, 300 g of a target water-soluble resin, and 2,100 g of water are mixed well (premixing), and then dispersed for four hours using a bead mill (for example, "DYNO-MILL" manufactured by SHINMARU ENTERPRISES CORPORATION) having a volume of 0.6 L and filled with 1,800 parts of beads for grinding (for example, zirconia beads having a diameter of 0.5 mm). After the dispersion, the viscosity of the obtained carbon black dispersion at 25°C is measured using an E-type viscosimeter (for example, "TVE25L-type viscometer" manufactured by Toki Sangyo Co., Ltd.), and then the carbon black dispersion is stored in an air-blowing constant temperature incubator set at 70°C for one week, and the viscosity is measured again. At this time, when the viscosity of the dispersed solution immediately after the dispersion is 100 mPa·s or less and the absolute value of the viscosity change rate of the carbon black dispersion before and after the storage is 10% or less, the above water-soluble resin is determined to be a pigment dispersing resin.

Regardless of whether the pigment dispersing resin is a water-soluble resin or a water-insoluble resin, the pigment dispersing resin may also function as the binder resin described above.

When a water-soluble resin is used as a pigment dispersing resin, its acid value is preferably within a range from 100 to 450 mgKOH/g or less, more preferably from 120 to 400 mgKOH/g. When the acid value is within the above ranges, dispersion stability of a pigment can be maintained, and stable discharge from an inkjet head is possible regardless of use conditions. In addition, it is also preferable because solubility of a pigment dispersing resin in water can be secured, and interaction in the pigment dispersing resin becomes favorable, whereby the viscosity of the pigment dispersion can be controlled, and favorable discharge performance from an inkjet head can be exhibited.

In contrast, when a water-insoluble resin is used as a pigment dispersing resin, the acid value is preferably within a range from 0 to 100 mg KOH/g, more preferably from 5 to 90 mgKOH/g, and even more preferably from 10 to 80 mgKOH/g. When the acid value is within the above ranges, printed matter having excellent dryness and favorable print quality can be obtained.

The acid value of a resin can be measured using a known device. The acid value of a resin in the present disclosure is a value measured using a potentiometric titration method in accordance with JIS K 2501. As a specific example of a measurement method, there is mentioned a method where a resin is dissolved in a tolueneethanol mixed solvent using AT-610 manufactured by Kyoto Electronics Manufacturing Co., Ltd., followed by titration with a potassium hydroxide solution, and the acid value is calculated from the titration amount up to the end point.

In the aqueous inkjet ink according to the present embodiment, it is preferable to introduce an aromatic group into a pigment dispersing resin from the viewpoint of improving adsorption ability to a pigment and securing dispersion stability and discharge stability. Note that the aromatic group includes, but is not limited to, a phenyl group, a naphthyl group, an anthryl group, a tolyl group, a xylyl group, a mesityl group, and an anisyl group. Thereamong, a phenyl group, a naphthyl group, and a tolyl group are preferable in terms of sufficiently securing dispersion stability.

From the viewpoints of dispersion stability and discharge stability of a pigment, and improvement of print quality and dryness of printed matter, the amount of a monomer including an aromatic ring introduced is preferably within a range from 5% to 75% by mass, more preferably from 5% to 65% by mass, and even more preferably from 10% to 50% by mass, relative to the total amount of the monomer

### configuring a pigment dispersing resin.

### <Surfactant>

The aqueous inkjet ink according to the present embodiment may include a surfactant. Examples of surfactants that can be used include acetylene diol-based surfactants, acetylene monool-based surfactants, siloxane-based surfactants (excluding the above-described acrylic-silicone copolymers (having a glass transition temperature of less than 50°C), urethane-silicone copolymers, and fatty acid esters having a silicone chain structure), fluorinebased surfactants, and polyoxyalkylene monoalkyl etherbased surfactants (except those having a terminal alkyl group with 1 to 4 carbon atoms). One of these surfactants may be used alone, or two or more of these surfactants may be used in combination.

Thereamong, it is preferable to use one or more surfactants selected from the group consisting of an acetylene diol-based surfactant and a siloxane-based surfactant, as the surfactant, because surface tension of the aqueous inkjet ink according to the present embodiment can be greatly reduced in a very short time, print quality of printed matter is improved, and wettability is favorable even for a printing substrate having a relatively large surface free energy.

Examples of commercially available acetylene diols which are preferably used include Surfynol^{®} 61, 104E, 104H, 104A, 104BC, 104DPM, 104PA, 104PG-50, 420, 440, 2502, SE, SE-F, and DF-110D, Dynol^{®} 604 and 607 (manufactured by Evonik Japan Co., Ltd.), and OLFINE^{®} E1004, PD-001, PD-002W, and PD-004 (manufactured by Nisshin Chemical Industry Co., Ltd). Thereamong, Surfynol 440 and/or Surfynol 2502 are preferably used in terms of excellent discharge stability.

Examples of commercially available siloxane-based surfactants which are suitably used include: TEGO^{®} Wet 270, TEGO Wet 280, TEGO Twin 4000, TEGO Twin 4100, TEGO Glide 410, TEGO Glide 432, TEGO Glide 435, TEGO Glide 440, and TEGO Glide 450 manufactured by Evonik Japan Co., Ltd.; and SILFACE SAG series manufactured by Nisshin Chemical Industry Co., Ltd. Thereamong, one or more commercially available products selected from the group consisting of TEGO Wet 270, TEGO Wet 280, TEGO Twin 4000, and TEGO Twin 4100 are preferably used.

### <Water>

The aqueous inkjet ink according to the present embodiment includes water. As water included in the ink, it is preferable to use ion exchange water (deionized water) instead of general water including various ions. The content of water is preferably within a range from 45% to 75% by mass, and particularly preferably from 50% to 70% by mass, relative to the total amount of the aqueous inkjet ink. Since water has a low boiling point, it volatilizes preferentially, for example, at a nozzle end face of an inkjet head, and a solid content concentration at the gasliquid interface tends to increase. Consequently, film formation of a binder resin, unevenness of a surfactant, and thickening of an aqueous inkjet ink occur, which may lead to deterioration of discharge stability. In contrast, by keeping the water content within the above ranges, discharge stability is favorable, for example, even after a long period of suspension.

### <Other ingredients>

The aqueous inkjet ink according to the present embodiment may include a pH adjuster and/or other additive in addition to the above-described components. Examples of the above-described other additive include a crosslinking agent, a preservative, an ultraviolet absorber, and an infrared absorber. For each of these components, one or more conventionally known compounds can be used.

### <Method of producing aqueous inkjet ink>

The aqueous inkjet ink according to the present embodiment can be produced using a conventionally known method. For example, when a colorant which is water-insoluble (water-insoluble colorant) is used, a water-insoluble colorant dispersion is produced by dispersing the water-insoluble colorant in a medium (aqueous medium) including at least water. In contrast, when a colorant which is water soluble (water-soluble colorant) is used, a water-soluble colorant aqueous solution is produced by dissolving the water-soluble colorant in an aqueous medium. Then, water, the diol (A), the diol (B), a binder resin, a wax, and, as necessary, a water-soluble organic solvent other than the diol (A) and the diol (B), a surfactant, or the like are added to the water-insoluble colorant dispersion and/or the water-soluble colorant aqueous solution, and after stirring and mixing sufficiently, coarse particles are removed through a technique such as filtration or centrifugation. However, the method of producing the aqueous inkjet ink according to the present embodiment is not limited to the above-described method.

### <Properties of aqueous inkjet ink>

The aqueous inkjet ink according to the present embodiment preferably has a viscosity of 3 to 15 mPa·s at 25°C. In this viscosity range, droplets of the aqueous inkjet ink can be discharged in a stable manner not only from inkjet heads having a discharge frequency of about 4 to 10 KHz, but also from inkjet heads having a high discharge frequency of about 20 to 70 KHz. In particular, when the viscosity of the aqueous inkjet ink of the present embodiment at 25°C is within a range from 4 to 10 mPa·s, the aqueous inkjet ink can be discharged in a stable manner even when an inkjet head having a design resolution of 600 dpi or higher is used. Note that in the present disclosure, the viscosity is a value measured under an environment of 25°C using a cone plate type rotational viscometer (E-type viscometer, cone angle 1°34') such as "TVE25L-type viscosimeter" manufactured by Toki Sangyo Co., Ltd.

In terms of obtaining the aqueous inkjet ink having excellent discharge stability and print quality of printed matter, static surface tension of the aqueous inkjet ink of the present embodiment at 25°C is preferably within a range from 18 to 35 mN/m, and particularly preferably from 21 to 32 mN/m. Note that in the present disclosure, the static surface tension is a value measured under an environment of 25°C by the Wilhelmy method (plate method), using an "automatic surface tensiometer CBVP-Z" manufactured by Kyowa Interface Science Co., Ltd, for example.

When the aqueous inkjet ink of the present embodiment includes a water-insoluble colorant, the median diameter (D50) of the water-insoluble colorant on a volume basis is preferably within a range from 30 to 450 nm, more preferably from 50 to 400 nm, and particularly preferably from 70 to 350 nm, in terms of achieving a high level of both discharge stability, and density or an opacifying property of printed matter. Note that the D50 of the water-insoluble colorant can be measured using the same method as the D50 of resin microparticles described above.

### <Set of aqueous inkjet inks>

The aqueous inkjet ink of the present embodiment may be used alone or can also be used as a set of aqueous inkjet inks where two or more aqueous inkjet inks are combined. Examples of the set of aqueous inkjet inks include: a set (process color ink set) of four-color aqueous inkjet inks including a cyan aqueous inkjet ink (aqueous cyan ink), a magenta aqueous inkjet ink (aqueous magenta ink), a yellow aqueous inkjet ink (aqueous yellow ink), and a black aqueous inkjet ink (aqueous black ink); and a set of five-color aqueous inkjet inks where an aqueous white ink is added to the process color ink set. Note that it is preferable that all aqueous inkjet inks making up the set of aqueous inkjet inks satisfy the requirements of the above-described embodiments of the present invention.

### <Ink-pretreatment liquid set>

The aqueous inkjet ink of the present embodiment, and the set of aqueous inkjet inks described above can also be used in combination with a pretreatment liquid including a coagulant (in the form of ink-pretreatment liquid set). By applying the pretreatment liquid including a coagulant to a printing substrate before printing an aqueous inkjet ink, a layer (ink aggregation layer) for intentionally aggregating a solid component included in the aqueous inkjet ink can be formed. Then, by causing the aqueous inkjet ink to land on the ink aggregation layer, coalescence and color mixing of droplets of the aqueous inkjet inks can be prevented, and print quality of printed matter can be remarkably improved.

Note that as the coagulant, for example, a water-soluble inorganic salt or organic salt including a polyvalent metal ion; and a resin having a cationic group where a cationic group equivalent is greater than an anionic group equivalent can be used.

### <Inkjet printing method>

The aqueous inkjet ink of the present embodiment is used in the inkjet printing method described above. That is, the aqueous inkjet ink according to the present embodiment is discharged onto a printing substrate from an inkjet head having a fine nozzle (discharge step). The aqueous inkjet ink discharged onto the printing substrate is preferably dried using a drying mechanism (drying step).

### <<Discharging step>>

As an operation method for an inkjet head in the discharging step, there are a shuttle (scanning) method where an aqueous inkjet ink is discharged and recorded while the inkjet head is scanned back and forth in a direction perpendicular to a transport direction of the printing substrate, and a single pass method where an aqueous inkjet ink is discharged and recorded when the printing substrate is passed through the lower part of an inkjet head fixedly arranged. The inkjet head equipped with the aqueous inkjet ink of the present embodiment may adopt either the shuttle method or the single pass method. In particular, the single pass method is preferably selected because the landing position of droplets of the aqueous inkjet ink does not easily deviate, and thus print quality of printed matter is improved, and further, high-speed printing can be performed, and high productivity as an alternative to forme-based printing can be achieved.

The discharge method from the inkjet head can also be selected any from known methods. Examples of such discharge methods include a piezo method using a change in the volume of a piezoelectric element, a thermal method where an aqueous inkjet ink is discharged using bubbles generated through heating by using a heater, and a valve method where a pressurized aqueous inkjet ink is discharged while a lid (valve) of a nozzle is opened and closed using a solenoid.

The amount of droplets of the aqueous inkjet ink discharged from the inkjet head is preferably within a range from 0.5 to 20 picoliters, and particularly preferably from 0.5 to 15 picoliters, in terms of reducing drying load and improving print quality. In terms of improving print quality, it is preferable to adjust printing conditions (specifically, driving frequency and the number of mounted inkjet heads, and printing speed) such that recording resolution of printed matter is 600 dpi or more, and it is particularly preferable to adjust the printing conditions such that the recording resolution is 1,200 dpi or more.

### <<Drying step>>

Examples of drying methods adopted in a drying mechanism used in the drying step include heat drying, hot air drying, infrared (e.g., infrared rays having a wavelength of 700 to 2,500 nm) drying, microwave drying, and drum drying. One or more of these methods can be any selected and used in the above drying step. When two or more of the above drying methods are employed, the drying methods may be used separately (for example, consecutively) or may be simultaneously used together. For example, when the heat drying method and the hot air drying method are used together, the ink can be dried more quickly than when the methods are each used alone.

In particular, from the viewpoint of preventing bumping of liquid components in the aqueous inkjet ink and obtaining printed matter having excellent print quality, when the heat drying method is employed, the drying temperature is preferably set within a range from 35°C to 100°C, and when the hot air drying method is employed, the hot air temperature is preferably set within a range from 50°C to 250°C. From the same point of view, when the infrared drying method is employed, it is preferable that 50% or more of an integrated value of the total output of irradiated infrared rays is in a wavelength region of 700 to 2,200 nm.

### <Printing substrate>

The printing substrate where the aqueous inkjet ink according to the present embodiment is printed is not particularly limited. Meanwhile, even with substrates which are generally considered prone to bleeding or beading, such as low-penetration or non-permeable substrates, and even when printing at high-speed, the use of the aqueous inkjet ink according to the present embodiment enables production of printed matter having a print quality equivalent to that of printed matter produced using a forme-based printing.

In the present disclosure, permeability of a printing substrate can be determined using a water absorption amount measured using a dynamic scanning absorption meter. Specifically, a printing substrate whose water absorption amount of pure water at a contact time of 100 msec measured using the following method is less than 1 g/m² is referred to as a "non-permeable substrate", a printing substrate whose water absorption amount is 1 g/m² or more and less than 6 g/m² is referred to as a "low-permeation substrate", and a printing substrate whose water absorption amount is 6 g/m² or more is referred to as a "permeable substrate".

Note that the water absorption amount of a printing substrate can be measured, for example, under an environment of 23°C and 50% RH using a dynamic scanning absorption meter (for example, "KM500win" manufactured by KUMAGAI RIKI KOGYO Co., Ltd.) set under the following conditions, and using a printing substrate that is approximately 15 to 20 cm square, as a sample.
· Measurement method: spiral scanning (spiral method)
· Measurement start radius: 20 mm
· Measurement end radius: 60 mm
· Contact time: 10 to 1,000 msec
· Number of sampling points: 19 (measured to result in approximately equal intervals relative to the square root of the contact time)
· Scanning interval: 7 mm
· Speed switching angle of rotation table: 86.3 degrees
· Head box conditions: width 5 mm, slit width 1 mm

Examples of low-permeation and non-permeable substrates include: plastic films and sheets such as polyvinyl chloride sheets, polyethylene terephthalate (PET) films, polypropylene films, polyethylene films, polyethylene sheets, nylon films, nylon sheets, polystyrene films, polystyrene sheets, and polyvinyl alcohol films; coated paper such as standard coated paper, art paper, and cast paper; metals such as aluminum, iron, stainless steel, and titanium; and glass.

The surface of the above-listed printing substrates may be smooth or uneven. The above printing substrates may be transparent, semi-transparent, or opaque. The shape of the above printing substrates may be a roll shape or a sheet form. A laminate of two or more of the above-listed printing substrates, affixed to each other, may be used as a printing substrate. A releasable adhesive layer or the like may be provided on the opposite side to the printed surface, or an adhesive layer or the like may be provided on the printed surface subsequent to printing.

It is also preferable to apply surface modification such as corona treatment or plasma treatment to the printed surface of the above-listed printing substrates because this improves wettability of the aqueous inkjet ink according to the present embodiment, provides printed matter that has excellent print quality and drying properties, and has favorable abrasion resistance and substrate adhesion due to uniformity of the surface of the printed matter.

The aqueous inkjet ink according to the present embodiment has excellent water resistance and abrasion resistance, and can be used without laminating for commercial printed matter, packaged printed matter, and the like. For example, it can be used for labels, packages, and the like. In these applications, a printing substrate may be a plastic film. For example, since a binder resin enables an ink film to be bonded to a printing substrate, printing can be performed on polyethylene sheets, polypropylene sheets, and the like.

### <Printed matter>

According to some embodiments, it is possible to provide printed matter obtained by printing the above-described aqueous inkjet ink according to the present embodiment on a printing substrate. The printed matter includes a printing substrate, and an ink film formed by applying the aqueous inkjet ink according to the present embodiment to the printing substrate. The printed matter can have favorable abrasion resistance and water resistance because the ink film is formed with a binder resin, and the ink film is given slip properties by a wax. Preferably, by having the wax oriented on the surface of the ink film, slip properties are imparted, and the abrasion resistance can be further enhanced.

### Examples

Hereinafter, the present invention will be more specifically described with reference to examples and comparative examples. Note that in the following description, "parts" and "%" are based on mass unless otherwise specified.

### <Production of binder resin>

A water-based solution of an acrylic resin (30% solid content) was produced using the same raw material and method as a binder resin 28 produced in examples of JP 2020-180178 A, and used as a binder resin.

Note that the term "water-based solution" refers to a solution including an aqueous solvent, and a component dispersed and/or dissolved in the aqueous solvent.

### <Production of pigment dispersion>

### (Production of black pigment dispersion)

An amount of 15 parts of carbon black ("PrinteX85" manufactured by Orion Engineered Carbons S.A.), 3 parts of a styrene-acrylic resin (a random polymer of styrene/acrylic acid/behenyl acrylate = 45/30/25 (mass ratio), all acid groups being neutralized with dimethylaminoethanol, acid value 230 mgKOH/g, mass average molecular weight 20,000), and 82 parts of water were charged in a mixing vessel equipped with a stirrer, and premixing was performed for 1 hour. Then, using a DYNO-MILL (capacity 0.6 L) manufactured by SHINMARU ENTERPRISES CORPORATION filled with 1,800 g of 0.5 mm diameter zirconia beads, a black pigment dispersion was produced by performing circulation dispersion until the 50% diameter of the carbon black reached about 100 nm. Here, the 50% diameter is a particle diameter where cumulative value is 50% in a volume-based particle size distribution measured using a dynamic light scattering method. The same applies below.

### (Production of cyan pigment dispersion, magenta pigment dispersion, and yellow pigment dispersion)

A cyan pigment dispersion, a magenta pigment dispersion, and a yellow pigment dispersion were produced using the same raw materials and methods as the black pigment dispersion, except that the following pigments were used as pigments and circulation dispersion was performed until the following 50% diameters were each achieved.
· Cyan pigment dispersion: LIONOL BLUE 7358G (C.I. Pigment Blue 15:3) manufactured by TOYOCOLOR CO., LTD., 50% diameter = 150 nm
· Magenta pigment dispersion: Toshiki Red 150TR (C.I. Pigment Red 150) manufactured by TOKYO SHIKIZAI INDUSTRY CO., LTD., 50% diameter = 200 nm
· Yellow pigment dispersion: LIONOL YELLOW TT1405G (C.I. Pigment Yellow 14) manufactured by TOYOCOLOR CO., LTD., 50% diameter = 150 nm

### <Production of set of aqueous inkjet inks>

Using a pigment dispersion produced with the above method, each raw material was charged into a mixing vessel equipped with a stirrer so as to obtain the blending formulation described in each column of Table 1. After charging, the mixture was heated to about 50°C and then mixed for 1 hour. Thereafter, the mixture was cooled to ordinary temperature (about 25°C), and filtration was performed with a membrane filter having a pore size of 1.2 µm to produce aqueous inkjet inks 1 to 108. Note that in the production of the aqueous inkjet inks, the black pigment dispersion, cyan pigment dispersion, magenta pigment dispersion, and yellow pigment dispersion were each used as a pigment dispersion, and aqueous inkjet inks were produced with identical compositions except for the pigment dispersion type, thereby producing a set of aqueous inkjet inks consisting of black (aqueous black ink), cyan (aqueous cyan ink), magenta (aqueous magenta ink), and yellow (aqueous yellow ink).

In the production of aqueous inkjet inks, raw materials were charged while the mixture in the mixing vessel was stirred. Raw materials in each column of Table 1 were charged in order from the top row. However, when any of these components was not included, the component was skipped and the next component was added. In the case of a component including two or more types of raw materials, the order of charging within the component is discretionary.

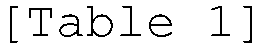

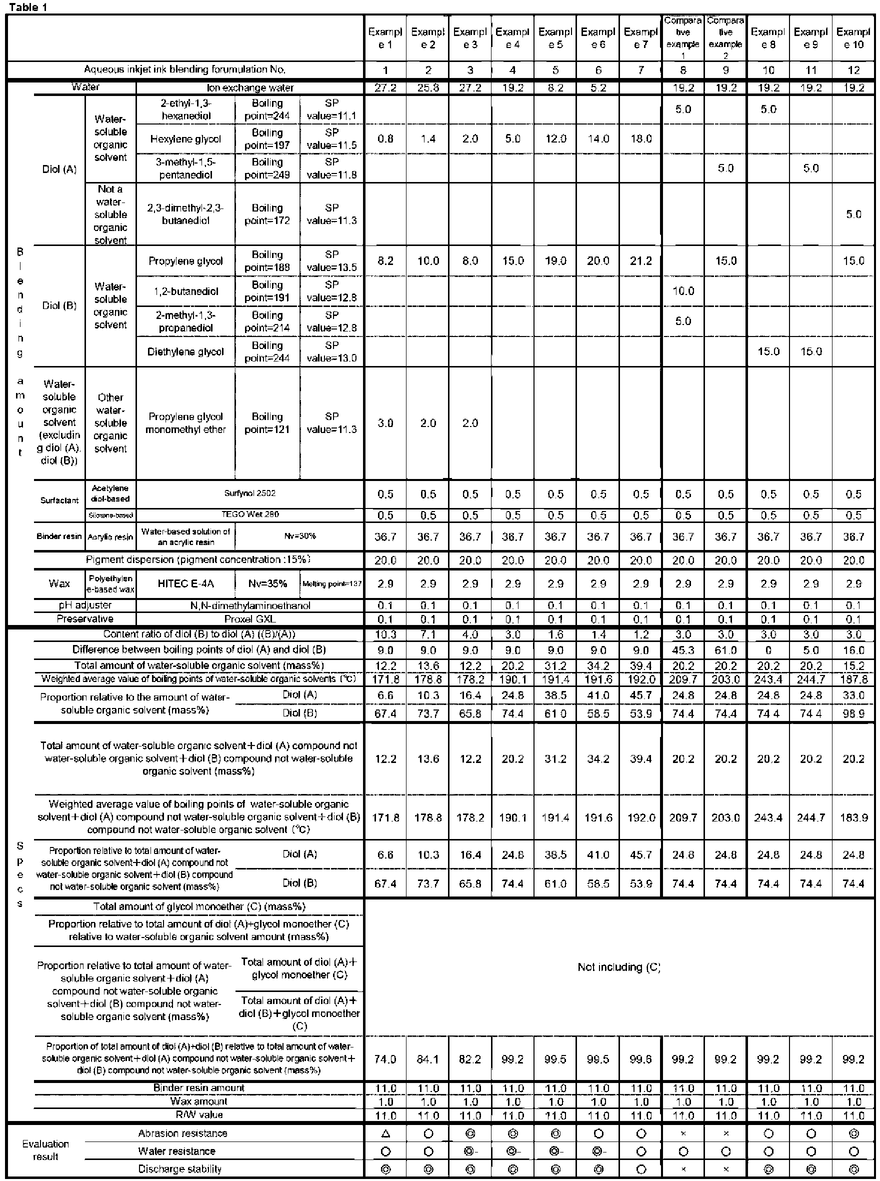

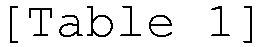

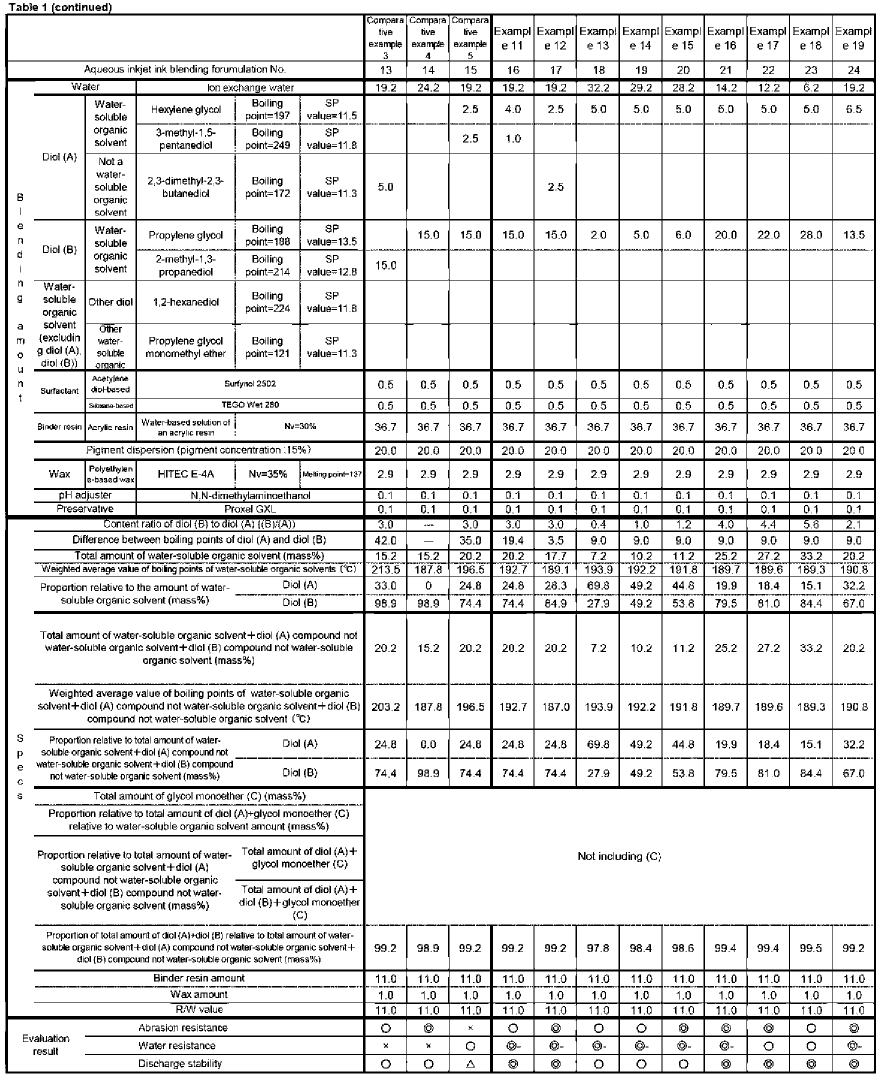

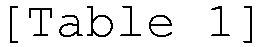

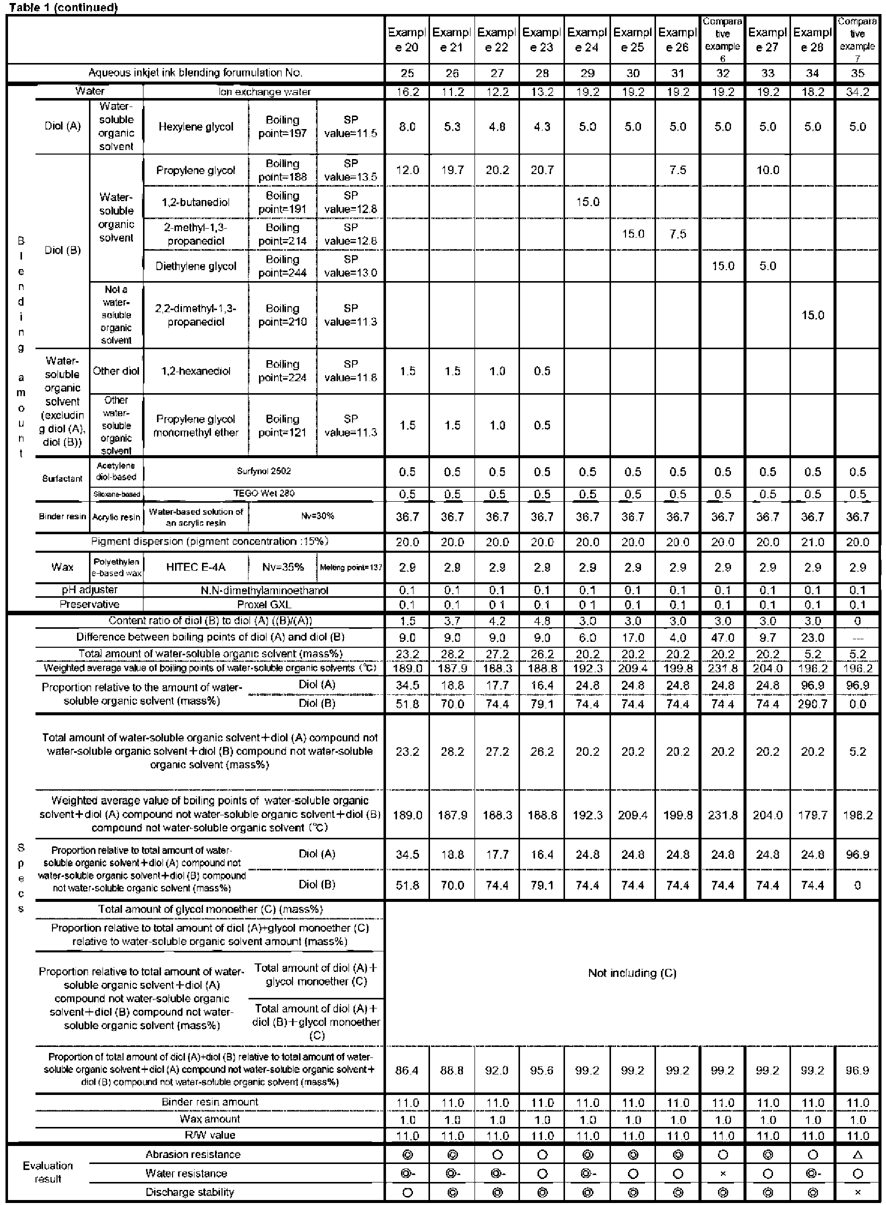

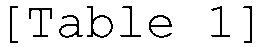

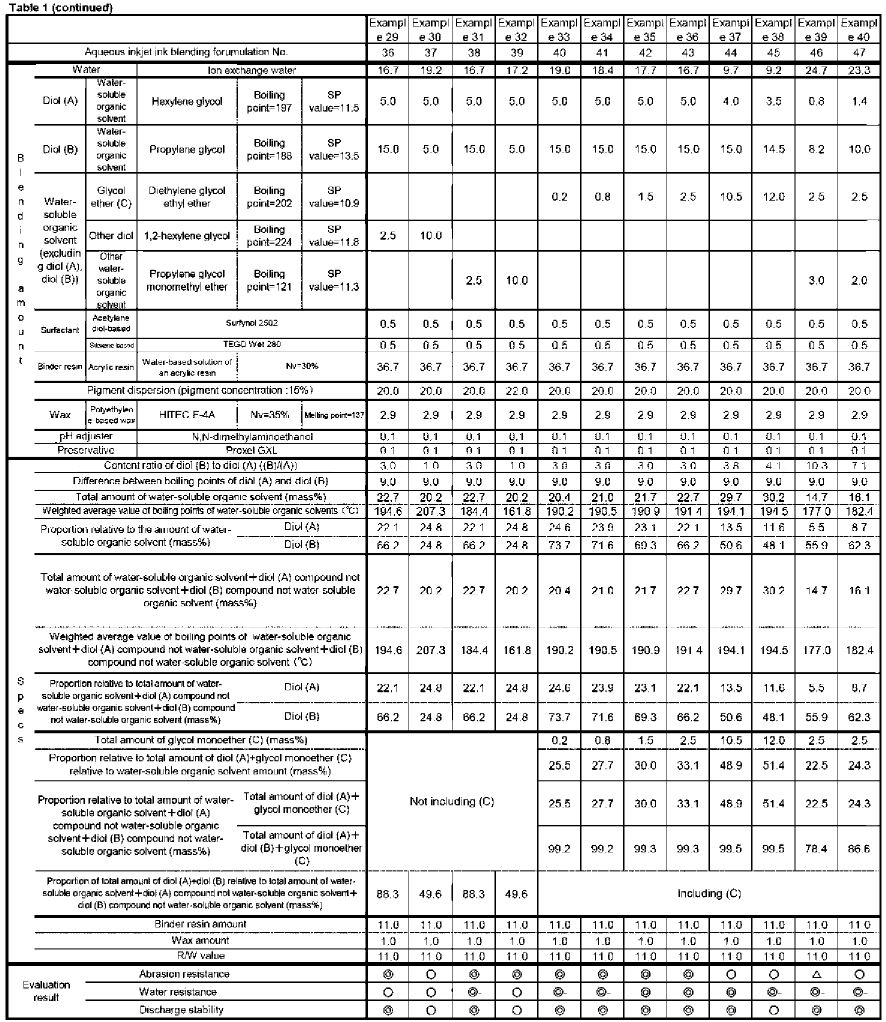

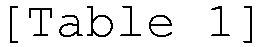

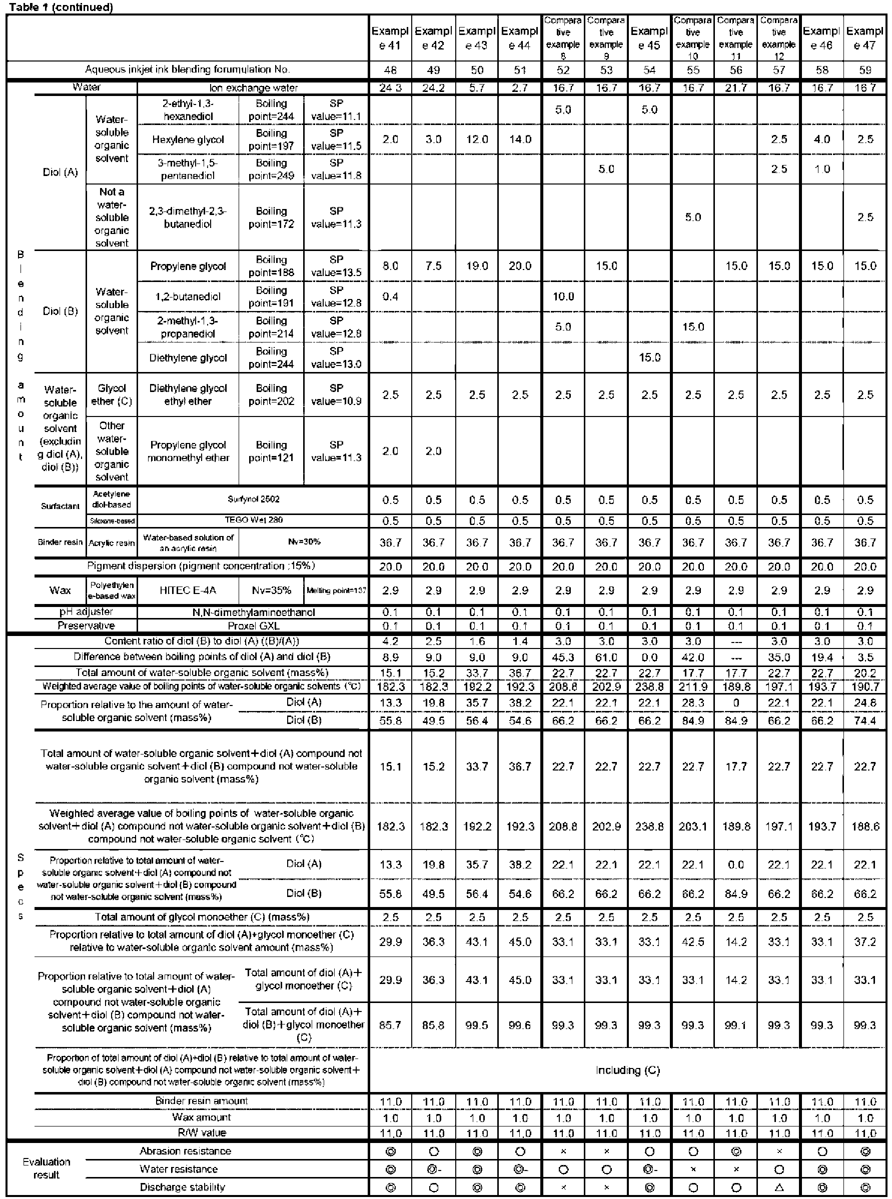

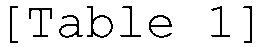

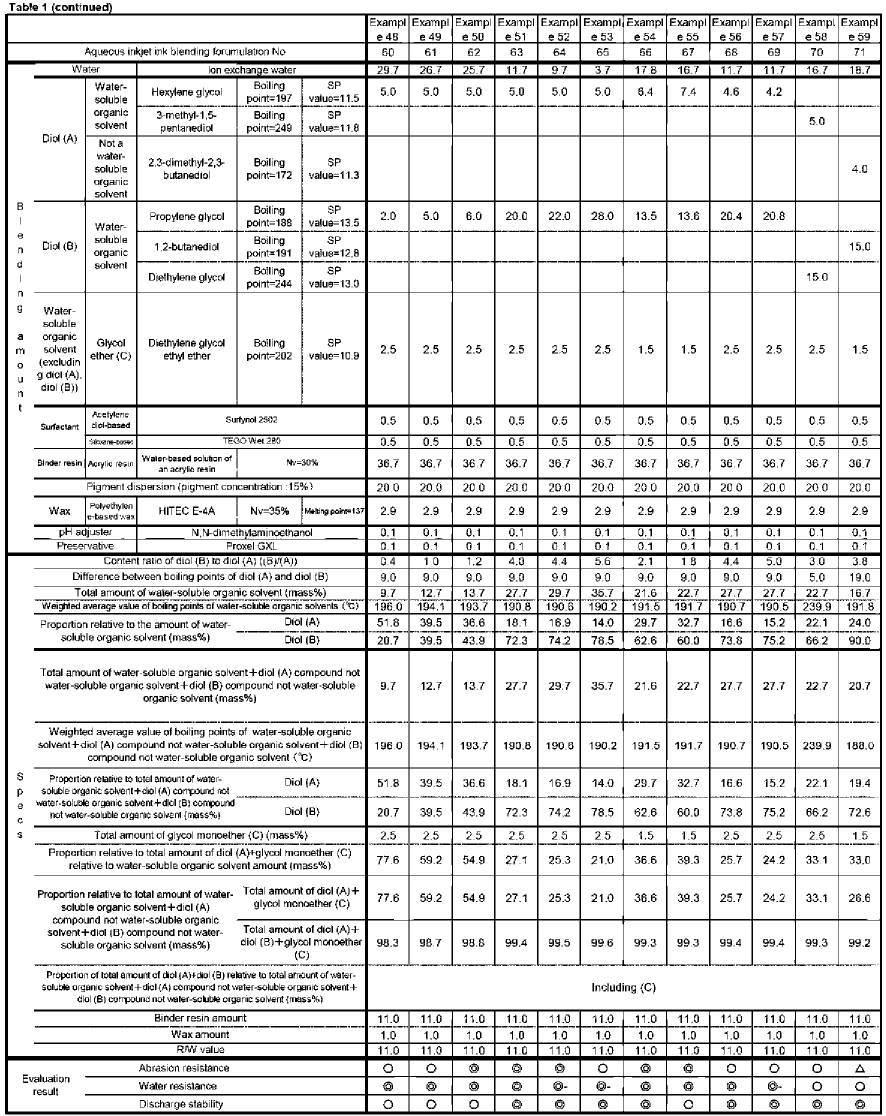

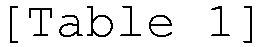

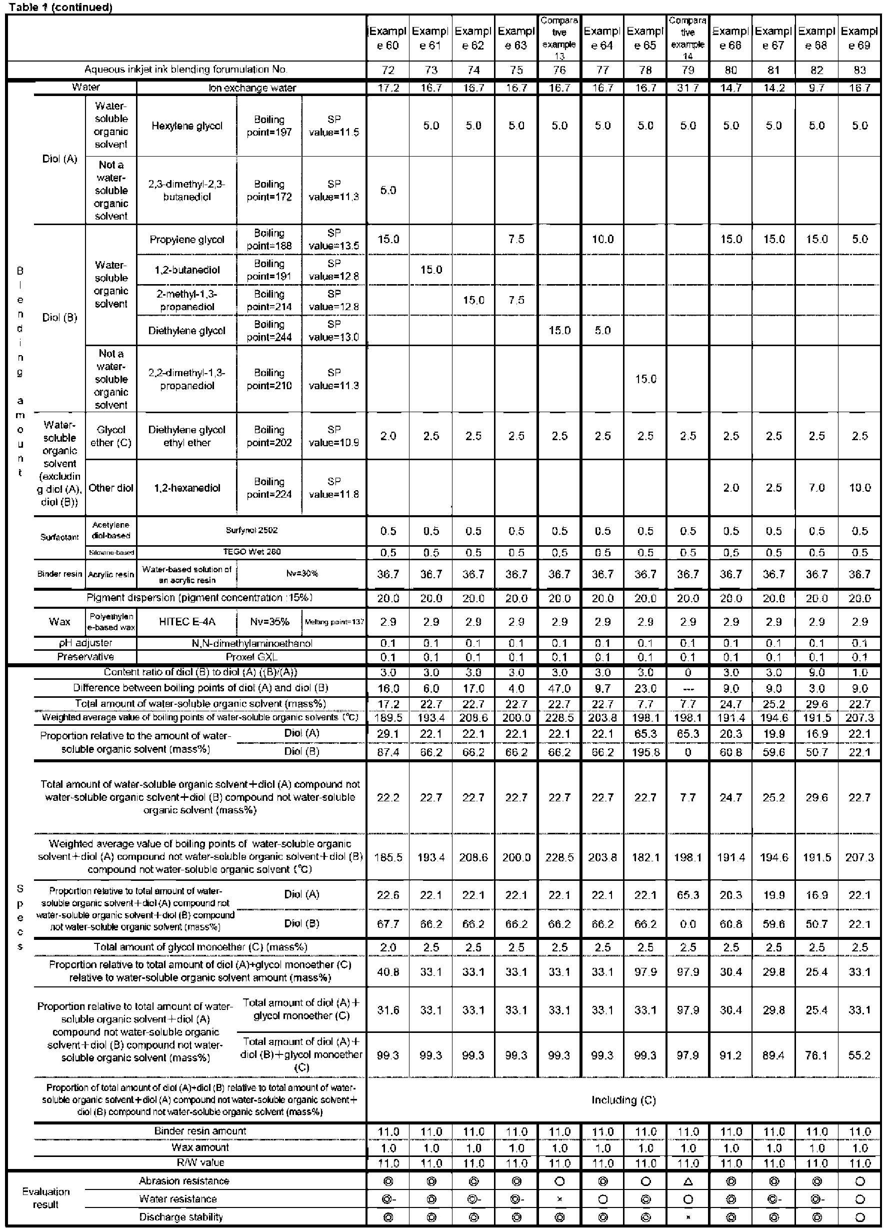

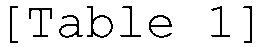

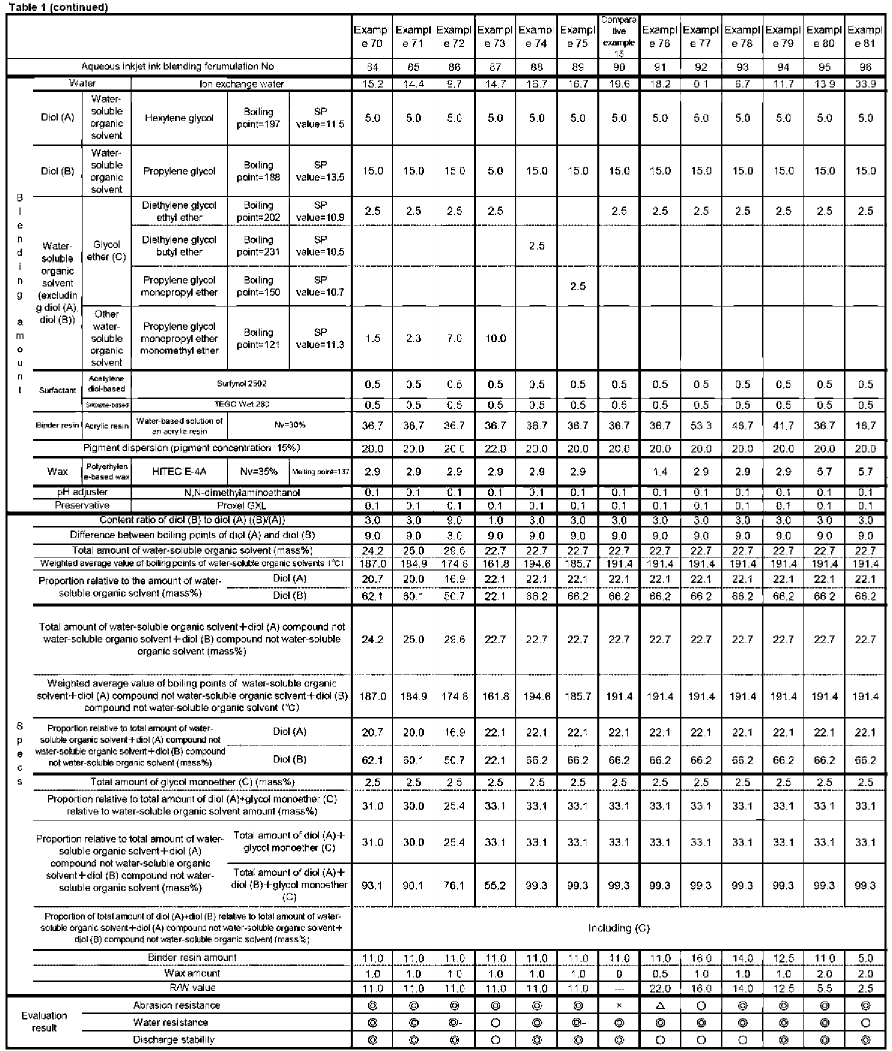

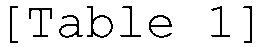

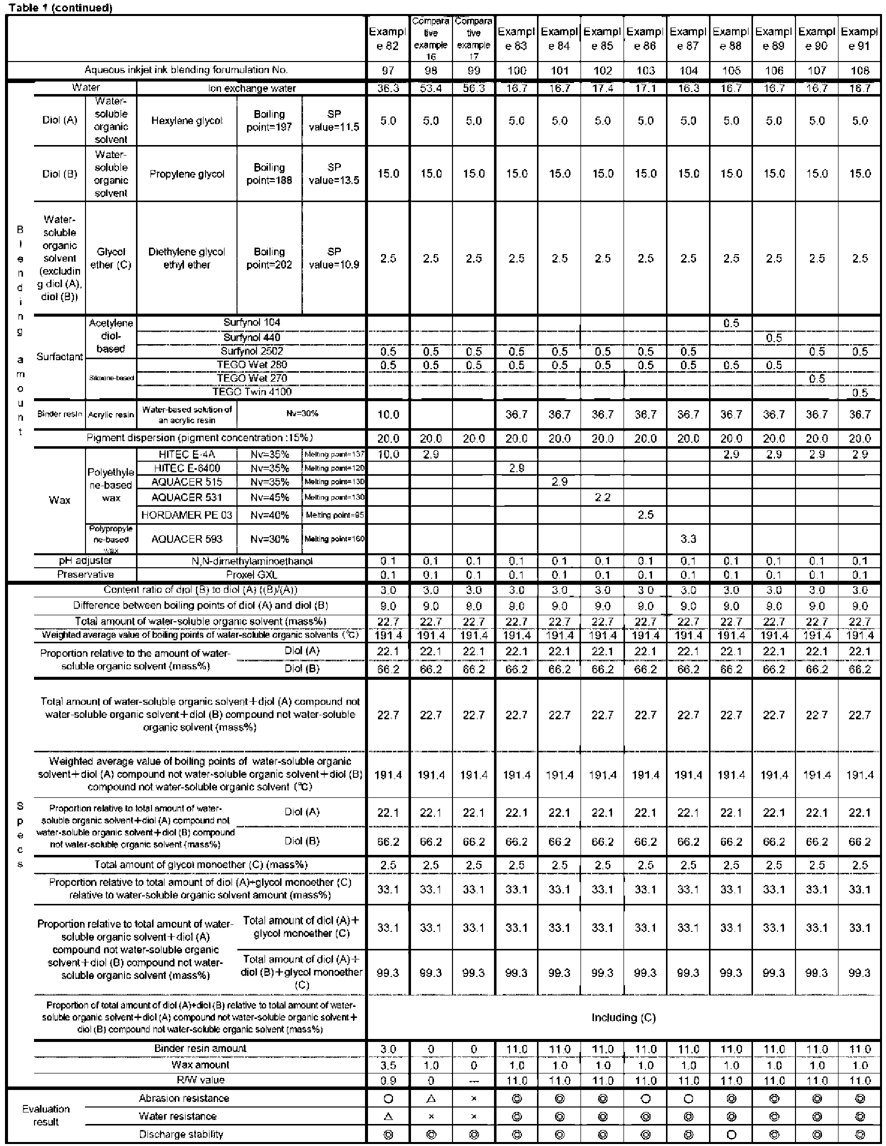

Details of product names listed in Table 1 are as follows. Note that the unit of boiling point and melting point described in Table 1 is °C, and the unit of SP value is (cal/cm³)^{1/2}. In Table 1, "Nv" represents the solid content concentration (unit: % by mass).
· SURFYNOL 104 (acetylene diol-based surfactant manufactured by Evonik Industries AG)
· SURFYNOL 440 (acetylene diol-based surfactant manufactured by Evonik Industries AG)
· SURFYNOL 2502 (acetylene diol-based surfactant manufactured by Evonik Industries AG)
· TEGO Wet 280 (polyether modified siloxane surfactant manufactured by Evonik Industries AG)
· TEGO Wet 270 (polyether modified siloxane surfactant manufactured by Evonik Industries AG)
· TEGO Twin 4100 (polyether modified siloxane surfactant manufactured by Evonik Industries AG)
· Hitec E-4A (oxidized polyethylene wax manufactured by TOHO Chemical Industry Co., Ltd., solid content 35%)
· Hitec E-6400 (oxidized polyethylene wax manufactured by TOHO Chemical Industry Co., Ltd., solid content 35%)
· AQUACER 515 (oxidized high-density polyethylene wax manufactured by BYK Japan KK, solid content 35%)
· AQUACER 531 (oxidized high-density polyethylene wax manufactured by BYK Japan KK, solid content 35%)
· HORDAMER PE 03 (polyethylene wax manufactured by BYK Japan KK, solid content 35%)
· AQUACER 593 (polypropylene wax manufactured by BYK Japan KK, solid content 30%)
· Proxel GXL: dipropylene glycol-aqueous solution of 1,2-benzoisothiazole-3-one (mixture of 1,2-benzoisothiazole-3-one : dipropylene glycol : water = 2 : 6 : 2, preservative manufactured by Arch Chemicals Inc.)

### <Production of printed matter>

An inkjet discharging apparatus on which four inkjet heads KJ4B-1200 (design resolution 1,200 dpi, nozzle diameter 20 µm) manufactured by KYOCERA Corporation were mounted side by side in the conveying direction of a printing substrate was installed at 25°C, and an aqueous black ink, an aqueous cyan ink, an aqueous magenta ink, and an aqueous yellow ink were filled in this order from the upstream inkjet head. On the conveyor, a biaxially-oriented polypropylene film "OPU-1" (thickness: 20 µm) manufactured by Mitsui Chemicals Tohcello, Inc., was fixed. Thereafter, the conveyor was driven at a speed of 50 m/min, and when the film substrate passed under the installation part of the inkjet heads, aqueous inkjet inks were respectively discharged under a condition of a drop volume of 2 pL, and an image was printed. The printing substrate was immediately put in an air oven at 70°C and dried for 3 minutes to produce printed matter.

As a print image, an aqueous cyan ink, an aqueous magenta ink, an aqueous yellow ink, and an aqueous black ink were each solid-printed (each color having a width of 5 cm and a length of 30 cm) at a 100% coverage rate without overlapping each other, and an image where the solid image portions were arranged adjacently in the order of cyan, magenta, yellow, and black (colored solid image) was used.

### [Examples 1 to 91 and comparative examples 1 to 17]

After a colored solid image was printed on a polypropylene film using the method described above, the following evaluation was performed using the printed matter. The evaluation results were as listed in Table 1.

### <Evaluation 1: evaluation of abrasion resistance>

A cyan ink printing part, a magenta ink printing part, a yellow ink printing part, and a black ink printing part were cut out from the printed matter with the colored solid image produced using the above method, and set as test pieces in an AB-301 Color Fastness Rubbing Tester manufactured by TESTER SANGYO CO., LTD. Then, an attached white cotton cloth for testing (cotton shirting No. 3) was attached to a rubbing element (self weight 200 g), and mechanical rubbing was performed for a predetermined number of times with varying the load applied to the rubbing element. After mechanical rubbing, the abrasion resistance was evaluated by visually confirming the condition of the printed matter surface and the degree of coloring of the cotton cloth. The evaluation criteria are as follows, and ⊚, ○, and △ were considered to be practically usable. Note that Table 1 lists the results of colors with the worst evaluation among the four colors evaluated.
⊚: No abrasion marks were on the printed surface and no coloring was observed on the cotton cloth even after performing mechanical rubbing 50 times with a 300 g weight on the rubbing element (500 g in total).
○: No abrasion marks were on the printed surface, and no coloring was observed on the cotton cloth even after performing mechanical rubbing 25 times with a 300 g weight on the rubbing element (500 g in total). However, there were abrasion marks on the printed surface and/or coloring was observed on the cotton cloth after performing mechanical rubbing 50 times under the same load condition.
△: No abrasion marks were on the printed surface, and no coloring was observed on the cotton cloth after performing mechanical rubbing 25 times with no weight on the rubbing element (load 200 g). However, there were abrasion marks on the printed surface and/or coloring was observed on the cotton cloth after performing mechanical rubbing 25 times with a 300 g weight on the rubbing element (500 g in total).
×: There were abrasion marks on the printed surface and/or coloring was observed on the cotton cloth after performing mechanical rubbing 25 times with no weight on the rubbing element (load 200 g).

### <Evaluation 2: evaluation of water resistance>

As in evaluation 1, test pieces were cut for each color from the printed matter with the colored solid image, and set in an AB-301 Color Fastness Rubbing Tester manufactured by TESTER SANGYO CO., LTD. Then, an attached white cotton cloth for testing (cotton shirting No. 3) sufficiently moistened with ion exchange water was attached to a rubbing element (self weight 200 g), and after mechanical rubbing was performed for a predetermined number of times with varying the load applied to the rubbing element, the abrasion resistance was evaluated by visually confirming the condition of the printed matter surface and the degree of coloring of the cotton cloth. The evaluation criteria are as follows, and ⊚, ⊚-, ○, and △ were considered to be practically usable. Note that Table 1 lists the results of colors with the worst evaluation among the 4 colors evaluated.
⊚: No abrasion marks were on the printed surface, and no coloring was observed on the cotton cloth even after performing mechanical rubbing 20 times with a 300 g weight on the rubbing element (500 g in total).
⊚-: No abrasion marks were on the printed surface, and no coloring was observed on the cotton cloth even after performing mechanical rubbing 10 times with a 300 g weight on the rubbing element (500 g in total). However, there were abrasion marks on the printed surface and/or coloring was observed on the cotton cloth after performing mechanical rubbing 20 times under the same load condition.
   ○: No abrasion marks were on the printed surface, and no coloring was observed on the cotton cloth even after performing mechanical rubbing 5 times with a 300 g weight on the rubbing element (500 g in total). However, there were abrasion marks on the printed surface and/or coloring was observed on the cotton cloth after performing mechanical rubbing 10 times under the same load condition.
△: No abrasion marks were on the printed surface, and no coloring was observed on the cotton cloth after performing mechanical rubbing 5 times with no weight on the rubbing element (load 200 g). However, there were abrasion marks on the printed surface and/or coloring was observed on the cotton cloth after performing mechanical rubbing 5 times with a 300 g weight on the rubbing element (500 g in total).
×: There were abrasion marks on the printed surface and/or coloring was observed on the cotton cloth after performing mechanical rubbing 5 times with no weight on the rubbing element (load 200 g).

### <Evaluation 3: evaluation of discharge stability>

The aqueous inkjet inks described in Table 1 were each filled in the inkjet printing device used for producing printed matter. Then, a nozzle check pattern was printed, and after it was confirmed that there were no nozzle failures, the device was left in an environment of 25°C for 10 minutes. After that, the nozzle check pattern was printed again, and the number of nozzle failures was counted visually to evaluate the discharge stability. The evaluation criteria are as follows, and ⊚ and ○ were considered to be practically usable. Note that the above evaluation was performed for each of the aqueous inkjet inks constituting the aqueous inkjet ink set. Table 1 lists the results of colors with the worst evaluation among the four colors evaluated.
⊚: No nozzle failure occurred.
○: Nozzle failure occurred in 1 to 9 nozzles.
△: Nozzle failure occurred in 10 to 49 nozzles.
×: Nozzle failure occurred in 50 or more nozzles.

As is clear from Table 1, an aqueous inkjet ink that include: the diol (A) having an SP value of 10.0 or more and less than 12.0, and including a branched alkylene group; the diol (B) having an SP value of 12.0 or more and 15.0 or less; a binder resin; and a wax, wherein the difference between the boiling point of the diol (A) and the boiling point of the diol (B) is 30°C or less, can produce printed matter excellent in water resistance and abrasion resistance, and at the same time has high discharge stability. In particular, by setting the difference between the boiling points of the diol (A) and the diol (B) to 30°C or less, it is considered that both the diol (A) and the diol (B) can remain in aqueous inkjet ink droplets on a printing substrate, preventing aggregation of the wax and promoting softening and reorientation of the binder resin, thereby making it possible to obtain printed matter excellent in abrasion resistance and water resistance. When a plurality of types of diol (A) and/or a plurality of types of diol (B) are used, it has been clarified that the same effect can be obtained by calculating a weighted average value of boiling points for each of the plurality of types of diol (A) and/or the plurality of types of diol (B), and setting the difference between the (weighted average values) of boiling points to 30°C or less.

Although the present invention has been described with reference to the above-described embodiments, the present invention is not limited to the above-described embodiments. The structure and details of the present invention can be modified in various ways within the scope of the present invention.

The disclosure of the present application is related to the subject matter described in Japanese Patent Application No. 2023-198147 filed on November 22, 2023, the entire disclosed contents of which are incorporated herein by reference.

## Claims

1. An aqueous inkjet ink comprising:
water; a diol; a binder resin; and a wax, wherein
the diol includes a diol (A) that has an SP value of 10.0 or more and less than 12.0 and includes a branched alkylene group, and a diol (B) that has an SP value of 12.0 or more and 15.0 or less, and
a difference between a boiling point of the diol (A) at one atmosphere, and a boiling point of the diol (B) at one atmosphere is 30°C or less.

2. The aqueous inkjet ink according to claim 1, wherein
the wax includes a polyolefin-based wax having a melting point of 100°C or more and 170°C or less at one atmosphere.

3. The aqueous inkjet ink according to claim 2, wherein
a value represented by R/W is 15 or less where W (g) is a content of the wax included in 100 g of the aqueous inkjet ink, and R (g) is a content of the binder resin included in 100 g of the aqueous inkjet ink.

4. The aqueous inkjet ink according to claim 1 or 2, further comprising: a glycol monoether (C) having a terminal alkyl group of 2 to 4 carbon atoms.

5. The aqueous inkjet ink according to claim 2, further comprising: a glycol monoether (C) having a terminal alkyl group of 2 to 4 carbon atoms, wherein
a value represented by R/W is 15 or less where W (g) is a content of the wax included in 100 g of the aqueous inkjet ink, and R (g) is a content of the binder resin included in 100 g of the aqueous inkjet ink.

6. A printed matter obtained by printing the aqueous inkjet ink according to claim 1 or 2 on a printing substrate.
